# EUROPÄISCHE PATENTSCHRIFT

(11) **EP 3 230 648 B1**
(45) Veröffentlichungstag und Bekanntmachung des Hinweises auf die Patenterteilung: **31.10.2018**
(21) Anmeldenummer: 14824398.3
(22) Anmeldetag: 12.12.2014
(51) Int. Cl.: F16L 37/36, F16K 31/44, F16K 31/528, F16K 1/12

(54) **VORGEFERTIGTE VENTIL-BAUEINHEIT, MONTAGEVERFAHREN ZUR MONTAGE DER VENTIL-BAUEINHEIT, AUFNAHMETEIL EINER MIT DER VENTIL-BAUEINHEIT AUSGESTATTETEN FLUID-TROCKENKUPPLUNG SOWIE DAS AUFNAHMETEIL AUFWEISENDE FLUID-TROCKENKUPPLUNG**
PREFABRICATED VALVE ASSEMBLY, ASSEMBLY METHOD FOR ASSEMBLING THE VALVE ASSEMBLY, RECEIVING PART OF A DRY COUPLING FOR FLUID EQUIPPED WITH THE VALVE ASSEMBLY, AND DRY COUPLING FOR FLUID WHICH HAS THE RECEIVING PART
ASSEMBLAGE DE SOUPAPES PRÉFABRIQUÉ, PROCÉDÉ DE MONTAGE DE L'ASSEMBLAGE DE SOUPAPES PRÉFABRIQUÉ, ÉLÉMENT DE LOGEMENT D'UN EMBRAYAGE À SEC POUR LIQUIDES ÉQUIPÉ DE L'ASSEMBLAGE DE SOUPAPES PRÉFABRIQUÉ AINSI QUE L'EMBRAYAGE À SEC POUR LIQUIDES PRÉSENTANT L'ÉLÉMENT DE LOGEMENT

(43) Veröffentlichungstag der Anmeldung: 18.10.2017
(73) Patentinhaber: Roman Seliger Armaturenfabrik GmbH, 22848 Norderstedt (DE)
(72) Erfinder: HAMKENS, Hauke Peter, 25870 Oldenswort (DE); SYLLA, Jan-Oliver, 25832 Tönning (DE)
(74) Vertreter: Stork Bamberger Patentanwälte PartmbB
(86) Internationale Anmeldenummer: PCT/EP2014/077573
(87) Internationale Veröffentlichungsnummer: WO 2016/091323

(56) Entgegenhaltungen:
- WO-A1-2011/010939
- DE-A1-102012 209 629
- DE-C- 858 617

## Beschreibung

Die Erfindung betrifft eine vorgefertigte Ventil-Baueinheit zum Einbau in ein Trockenkupplungs-Aufnahmeteil, das zum Kuppeln mit einem zugehörigen Trockenkupplungs-Steckteil einer Fluid führenden Trockenkupplung eingerichtet ist; **(i)** die Ventil-Baueinheit umfasst einen Führungs-Sitzring mit einer Sitzring-Innenwand sowie einen an der Sitzring-Innenwand mittels eines Führungs-Radiallagers radial gelagerten und entlang der zentralen Körperachse der Ventil-Baueinheit axial gleitbewegbaren Ventilkörper, wobei der Führungs-Sitzring ein erstes vorderseitiges Sitzringende aufweist und zum Kuppeln in eine gegen Drehung um seine zentrale Körperachse gesicherte Sperrposition setzbar ist; **(ii)** der Ventilkörper weist einen Ventilkopf, einen Ventilfuß sowie einen mittels des Führungs-Radiallagers an der Sitzring-Innenwand gelagerten Ventilstegteil auf, der den Ventilkopf und den Ventilfuß miteinander verbindet und axial beabstandet, wobei der außerhalb des Führungs-Sitzrings liegende Ventilfuß zur Drehmoment-Beaufschlagung mit Steuerelementen verbindbar ist; **(iii)** der Führungs-Sitzring weist an dem ersten Sitzringende einen Ventilsitz auf, der zusammen mit dem Ventilkopf ein Aufnahmeteil-Ventil bildet, wobei der Ventilkopf in Ventil-Schließposition dichtend in den Ventilsitz einfasst und in Ventil-Öffnungsposition an dem ersten Sitzringende aus dem Führungs-Sitzring hervortritt; **(iv)** der Führungs-Sitzring und der Ventilkörper befinden sich in einem Lagersitz des Führungs-Radiallagers, der zwischen dem Führungs-Sitzring und dem Ventilkörper relative Drehung sperrt und relative axiale Gleitbewegbarkeit zulässt, wobei das Führungs-Radiallager korrespondierende Lagerelemente aufweist, nämlich erste Lagerelemente, die an der Sitzring-Innenwand hervorstehen, sowie zweite Lagerelemente, die an dem Ventilstegteil ausgebildet sind, und wobei die korrespondierenden Lagerelemente im Lagersitz in wenigstens einer axialen Lagersitz-Lagerebene liegen.

Die Erfindung bezieht sich auch auf ein Montageverfahren zur Montage der Ventil-Baueinheit, auf ein Aufnahmeteil einer Fluid-Trockenkupplung, das mit der vorgefertigten Ventil-Baueinheit ausgestattet ist, sowie auf die Fluid-Trockenkupplung mit dem Aufnahmeteil und zugehörigem Steckteil.

Die vorgefertigte Ventil-Baueinheit ist selbständiger Bestandteil des Aufnahmeteils einer Trockenkupplung, mit der fluide Medien führende Leitungen und/oder Anschlüsse miteinander verbunden werden. Zum Beispiel wird eine Treibstoff-Schlauchleitung an einen Tank angeschlossen. Die Trockenkupplung setzt sich aus zwei Kupplungshälften zusammen, nämlich aus dem Aufnahmeteil oder Mutterteil sowie aus einem zugehörigen Steckteil oder Vaterteil. Zum Beispiel ist das Aufnahmeteil mit einer Treibstoff-Schlauchleitung verbunden, während das Steckteil einen Anschluss an einem Tank bildet. Eine gattungsgemäße Trockenkupplung weist eine typische Bauart und Funktion auf. Jede Kupplungshälfte umfasst ein Ventil mit einem Ventilkörper, der zum Öffnen und Schließen des zugehörigen Ventils axial verlagerbar ist. Im gekuppelten Zustand der beiden Kupplungshälften befinden sich die beiden Ventilkörper in einem Ventilverbund, der sich durch Drehbewegung eines mit einer Führungskulisse ausgestatteten Gehäuse-Steuerteils des Aufnahmeteils zum Öffnen und Schließen der Ventile axial verlagern lässt. Wenigstens der Ventilkörper des Steckteils wird mit Rückstellkraft beaufschlagt. Insbesondere weisen die Trockenkupplung und deren Bauteile gemäß einem NATO-Standardisierungsübereinkommen (STANAG) standardisierte Merkmale auf.

Trockenkupplungen des bekannten Bau- und Funktionstyps sind z.B. aus DE 858 617 und DE 10 2012 209 629 A1 bekannt. Aus DE 10 2012 209 629 A1 ist ein mehrteiliger Ventilkörper bekannt. Ein Ventilkopf ist mittels Schraubverbindung mit einem Ventilstegteil verbunden. Ein Ventilfuß, der einstückig mit dem Ventilstegteil ausgebildet ist, ist zum Befestigen von Steuerrollen vorgesehen. Zwischen einem Führungs-Sitzring und dem Ventilstegteil ist ein Führungs-Radiallager ausgebildet. Dieses weist Lagerränder bildende Rippen des Ventilstegteils auf, die in Führungsnuten des Führungs-Sitzrings axial geführt sind. Da sich der Ventilfuß mit einem dem Innendurchmesser des Führungs-Sitzrings entsprechenden radialen Querdurchmesser in einer Lagersitz-Lagerebene des Führungs-Radiallagers erstreckt, sind zur Montage bzw. Demontage einer aus dem Ventilstegteil, dem Ventilkopf, einem Ventilfuß und dem Führungs-Sitzring gebildeten Ventil-Baueinheit der Ventilkopf und das Ventilstegteil voneinander zu trennen, um die Lagerränder in die Führungsnuten zu setzen oder daraus zu entfernen. Es ist auch eine Ventil-Baueinheit gleicher Art mit einem Ventilkörper bekannt, der aus einem Ventilkopf und einem das Ventilstegteil mit Lagerrändern bildenden Ventilschwert, das einstückig in einen entsprechend dimensionierten Ventilfuß übergeht, zweiteilig zusammengefügt ist. Der Ventilkopf und das Ventilschwert sind mittels eines Bolzens, der durch einen Splint zu sichern ist, aneinander befestigt, wobei die Bolzenverbindung wie die zuvor erwähnte Schraubverbindung zur Montage und Demontage der Ventil-Baueinheit hergestellt bzw. gelöst werden muss. Nur dann ist der Ventilkörper, getrennt in mehrere Teile, aus dem Führungs-Sitzring herausführbar und umgekehrt in ihn hineinführbar. Einerseits ist damit eine aufwendige Fertigung der Ventil-Baueinheit verbunden. Andererseits muss der Ventilkörper zur Wartung zerlegt werden, um insbesondere den Führungs-Sitzring, Lagerelemente und/oder Dichtungen auszutauschen. Dies erfordert zeitaufwendige Arbeiten mit diversem Werkzeug. Zum Lösen der Schraubverbindung oder der Bolzenverbindung ist der Ventilkörper an der Seite des Ventilkopfes zunächst an einer Vorderseite des Führungs-Sitzrings aus diesem teilweise herauszuschieben. Der dann mit dem Ventilfuß verbleibende Teil des Ventilkörpers muss an der Rückseite des Führungs-Sitzrings aus diesem herausgezogen werden. Diese Maßnahmen sind in umgekehrter Reihenfolge zur Montage der Ventil-Baueinheit durchzuführen. Im Ganzen erfordern die Maßnahmen zur Montage bzw. Demontage besonderes Werkzeug, erhebliche Zeit und damit auch unerwünschte Ausfallzeit zum Betrieb der Trockenkupplung. Es besteht die Gefahr, dass der Ventilkörper und insbesondere der Ventilkopf beim Handhaben des Werkzeugs beschädigt werden. Die Schraub- oder Bolzenverbindung weist quer im Strömungsweg liegende Teile auf. Diese und eine aus Festigkeitsgründen erforderliche Überdimensionierung bedingen eine klobige, relativ wuchtige Bauform, die strömungsungünstig ist.

Der Erfindung liegen die Ziele zugrunde, die Ventil-Baueinheit der bezeichneten Trockenkupplung hinsichtlich Montage und Demontage besonders einfach zu gestalten und damit Arbeits- und Zeitaufwand zu verringern sowie einfache Handhabung und insbesondere auch verbesserte Funktionseigenschaften zu erhalten.

Die Ziele werden in Verbindung mit den eingangs genannten Merkmalen dadurch erreicht, dass zur Montage und Demontage einer erfindungsgemäßen Ventil-Baueinheit zwischen den korrespondierenden Lagerelementen der wenigstens einen Lagersitz-Lagerebene eine Schlüsselverbindung derart eingerichtet und ausgebildet ist, dass der Lagersitz durch einen relativen Drehversatz und einen relativen Axialversatz zwischen dem Führungs-Sitzring und dem Ventilkörper herstellbar und umgekehrt lösbar ist, wobei die korrespondierenden Lagerelemente durch den relativen Drehversatz in freie Positionen außerhalb der Lagersitz-Lagerebene setzbar sind, in denen der ungeteilte Ventilkörper in den Führungs-Sitzring hineinführbar und auf umgekehrtem Weg aus ihm herausführbar ist, und wobei die korrespondierenden Lagerelemente durch den relativen Axialversatz in der Lagersitz-Lagerebene innerhalb des Führungs-Sitzrings in und außer Eingriff bringbar sind.

Die Ziele werden auch durch ein erfindungsgemäßes Montageverfahren zur Montage der erfindungsgemäßen Ventil-Baueinheit erreicht, wobei die Ventil-Baueinheit außerhalb eines Aufnahmeteilgehäuses des Trockenkupplungs-Aufnahmeteils mit folgenden Schritten in angegebener Reihenfolge montiert wird:
**(a)** der Führungs-Sitzring und der Ventilkörper werden in einer ersten Axialposition mit ihren zentralen Körperachsen fluchtend koaxial ausgerichtet, wobei der Ventilfuß vor eines der Sitzringende gebracht wird; **(b)** der Führungs-Sitzring und der Ventilkörper werden durch Relativdrehung zueinander um wenigstens eine ihrer zentralen Körperachsen in eine erste Umfangs-Winkelposition gebracht, wobei sich in dieser ersten Umfangs-Winkelposition axiale Lagerebenen, in denen einerseits die ersten Lagerelemente und andererseits die zugehörigen zweiten Lagerelemente des Führungs-Radiallagers liegen, in unterschiedlichen Drehpositionen befinden und wobei die erste Umfangs-Winkelposition so gewählt wird, dass der Ventilkörper mit dem Ventilfuß durch den Führungs-Sitzring setzbar ist; **(c)** in der ersten Umfangs-Winkelposition wird der Ventilkörper soweit durch den Führungs-Sitzring gesetzt, dass in einer zweiten Axialposition solche Radialebenen, in denen einerseits die ersten Lagerelemente und andererseits die zugehörigen Montageausnehmungen liegen, zusammenfallen; **(d)** in der zweiten Axialposition werden der Führungs-Sitzring und der Ventilkörper durch Relativdrehung zueinander um wenigstens eine ihrer zentralen Körperachsen in eine zweite Umfangs-Winkelposition gebracht, in der die ersten Lagerelemente in den Montageausnehmungen radial deckungsgleich mit den zugehörigen zweiten Lagerelementen zusammentreffen; **(e)** zum Herstellen der den Lagersitz bildenden Überlappungsverbindung werden der Führungs-Sitzring und der Ventilkörper relativ zueinander axial versetzt.

Die erfindungsgemäße Ventil-Baueinheit bestimmt auch ein erfindungsgemäßes Trockenkupplungs-Aufnahmeteil, das mit der erfindungsgemäßen Ventil-Baueinheit zusammengefügt ist. Das erfindungsgemäße Trockenkupplungs-Aufnahmeteil umfasst die erfindungsgemäße Ventil-Baueinheit, ein sich entlang einer Aufnahmeteilachse axial erstreckendes rohrförmiges Aufnahmeteilgehäuse mit einem ersten Gehäuseende zum Kuppeln mit einem Trockenkupplungs-Steckteil der Trockenkupplung sowie mit einem zweiten Gehäuseende zur Verbindung mit einem Leitungselement, wobei die Ventil-Baueinheit in dem Aufnahmeteilgehäuse angeordnet ist, sowie eine Aufnahmeteil-Steuereinrichtung zum axialen Bewegen des Ventilkörpers aus dem Führungs-Sitzring an dem ersten Sitzringende in die Ventil-Öffnungsposition sowie umgekehrt in die Ventil-Schließposition, umfassend eine um die Aufnahmeteilachse drehbare Steuerhülse mit einer Führungskulisse sowie Steuerelemente, die an dem Ventilfuß angeordnet sind und die in die Führungskulisse einfassen, wobei zentrale Körperachsen des Ventilkörpers, der Steuerhülse und des Führungs-Sitzrings koaxial mit der Aufnahmeteilachse sind, der Führungs-Sitzring und die Steuerhülse die Innenwandung eines Fluid-Durchgangsraums bilden und der axial bewegbar gelagerte Ventilkörper durch richtungsabhängige Drehung der Steuerhülse und entsprechende Axialverlagerung in die Ventil-Schließposition bzw. die Ventil-Öffnungsposition setzbar ist.

Die Angabe "axial" wird jeweils im Zusammenhang als parallel zu oder in Richtung der zentralen Achse des Aufnahmeteilgehäuses (Aufnahmeteilachse) oder einer mit der Aufnahmeteilachse koaxialen Achse verstanden. Die Angabe "axial" bezieht sich insbesondere auf Teile oder Flächen, die sich in Axialrichtung erstrecken und in denen die Aufnahmeteilachse bzw. eine damit koaxiale Achse liegt. Die Angabe "radial" betrifft Richtungen, die von einer zugehörigen Achse ausgehen und senkrecht zu dieser Achse gerichtet sind, oder sie bezieht sich auf Teile oder Flächen, die sich in Bezug auf eine zentrale Achse dazu senkrecht und radial erstrecken.

Mit den erfindungsgemäßen Maßnahmen ist eine Reihe von Vorteilen verbunden. Ein wesentlicher Vorteil der erfindungsgemäßen Schlüsselverbindung besteht darin, dass der Ventilkörper mit gegenüber dem Führungs-Sitzring der Ventil-Baueinheit wählbarer Drehverstellung, das heißt mit unterschiedlichen Drehpositionen in den Führungs-Sitzring setzbar bzw. daraus entnehmbar ist. Die korrespondierenden Lagerelemente sind an einer Zwischenstelle längs des Ventilkörpers, der den Führungs-Sitzring durchfasst, zusammensteckbar und umgekehrt voneinander trennbar. Insbesondere dann, wenn der Ventilfuß einen radialen Querdurchmesser aufweist, der einem Innendurchmesser des Führungs-Sitzrings im Bereich des Führungs-Radiallagers entspricht, und sich in einer genannten axialen Lagersitz-Lagerebene des Führungs-Radiallagers erstreckt, lässt sich der Ventilkörper zum Trennen des Ventilköpers von dem Führungs-Sitzring bzw. umgekehrt zum Fertigen der Ventil-Baueinheit wie ein einziges Teil handhaben oder vorzugsweise einstückig ausbilden. Der Ventilkörper lässt sich infolgedessen ohne Montage und Demontage des Ventilkörpers in den Führungs-Sitzring setzen bzw. daraus entnehmen. Dadurch werden Montage und Demontage auch des Trockenkupplungs-Aufnahmeteils sowie Handhabung der gesamten Trockenkupplung erheblich verbessert. Herkömmliche zeitaufwendige Handhabung mit diversem Werkzeug entfällt. Die Handhabung des Ventilkörpers als ungeteilter Körper vermeidet die Strömungscharakteristik verändernde Beschädigung. Die erfindungsgemäßen Verfahrensschritte zur Montage und zur Demontage der Ventil-Baueinheit lassen sich einfach, ohne besonderes Werkzeug und präzise durchführen.

Eine besondere Gestaltung besteht darin, dass die korrespondierenden Lagerelemente nur in einer oder mehreren Radialebenen in die Lagersitz-Lagerebene hineinführbar und umgekehrt herausführbar sind.

Eine bevorzugte Gestaltung besteht darin, dass die korrespondierenden Lagerelemente durch Lagerelementpaare gebildet sind, die jeweils ein nasenförmiges Lagerelement und ein schienenförmiges Lagerelement aufweisen, die im Paar in der zugehörigen gemeinsamen Lagersitz-Lagerebene einander radial und axial überlappen und nur axial aus dieser Überlappungsverbindung herausführbar und umgekehrt in diese setzbar sind.

Die erfindungsgemäße Schlüsselverbindung weist besonders vorteilhaft Montageausnehmungen an den schienenförmigen Lagerelementen auf, die zum Herstellen der Lagerelemente-Überlappung in radial deckungsgleiche Positionen mit zugehörigen nasenförmigen Lagerelementen setzbar sind. Auf dem Weg über die Montagepositionen sind die nasenförmigen Lagerelemente und die schienenförmigen Lagerelemente axial in die radiale und axiale Überlappungsverbindung des Lagersitzes setzbar bzw. aus dieser herausführbar. Vorzugsweise weisen die nasenförmigen Lagerelemente U-förmige Ausnehmungen auf, die die schienen-förmigen Lagerelemente im Lagersitz axial und radial aufnehmen. Jedes nasenförmige Lagerelement ist durch relativen Drehversatz zwischen dem Führungs-Sitzring und dem Ventilkörper in die Montageausnehmung hineinbewegbar bzw. aus ihr herausbewegbar. Die Montageausnehmungen bilden die Zwischenstellen zum axialen Zusammenstecken der Lagerelemente. Außerhalb der Deckungsposition liegen die nasenförmigen Lagerelemente und die schienen-förmigen Lagerelemente in zwei unterschiedlichen Axialebenen. Das heißt, dass die axiale Sitzring-Lagerebene, in der die nasenförmigen Lagerelemente liegen, mit der axialen Ventilkörper-Lagerebene, in der die schienenförmigen Lagerelemente liegen, nicht mehr zusammenfallen. Hinsichtlich einer Gestaltung, die günstig für das Strömungsprofil des Ventilkörpers ist, sind die Montageausnehmungen im Bereich zwischen dem Ventilstegteil und dem Ventilfuß ausgebildet. Das Strömungsprofil wird insbesondere durch diese Anordnung nicht beeinträchtigt.

Eine bevorzugte Ausführungsform besteht darin, dass das Führungs-Radiallager durch zwei genannte Paare von korrespondierenden Lagerelementen gebildet ist, die im Umfangsabstand von 180° angeordnet sind, wobei der Ventilstegteil zwei genannte, den beiden zugehörigen nasenförmigen Lagerelementen zugeordnete Montageausnehmungen aufweist. Der Ventilkörper lässt sich mit einfacher, strömungstechnisch günstiger Geometrie schlank gestalten.

Die ersten Lagerelemente an dem Führungs-Sitzring werden zweckmäßig als U-förmige Gleitaufnahmen, vorteilhaft in Form von austauschbaren Gleitschuhen, ausgebildet, in die die schienenförmigen Lagerränder in Axialrichtung gleitend einfassen.

Vorteilhaft wird der Ventilkörper als ausschließlich außenumströmbarer Fluid-Strömungskörper ausgebildet. Der Ventilstegteil wird vorteilhaft durch ein einziges plattenförmiges Stegelement in Form eines Ventilschwertes mit die schienenförmigen Lagerelemente bildenden axialen Lagerrändern gebildet. Eine bevorzugte Gestaltung besteht darin, dass der Ventilfuß nur durch eine flossenartige Verdickung an dem plattenförmigen Stegelement gebildet ist. Man erreicht dadurch die Geometrie eines strömungstechnisch besonders vorteilhaften Ventilkörpers. Ein bevorzugtes Profil des Ventilkörpers besteht darin, dass der Ventilkopf, der Ventilstegteil und der Ventilfuß mit gleichen radialen Querdurchmessern gleich der maximalen Dimension des Strömungsquerschnitts sind. Ein besonders vorteilhaftes Strömungsprofil wird dadurch ausgebildet, dass der Ventilkopf an seiner dem Ventilstegteil zugewandten Seite konvex gewölbt ist. Insbesondere ist der konvexe Kopfbereich vorteilhaft ohne jede Verbindungsstelle mit dem Ventilstegteil ausgebildet.

Eine Gestaltung besteht darin, dass der Ventilfuß durch insbesondere nur ein radiales Fußquerelement gebildet ist, das in einer zugehörigen genannten Lagersitz-Lagerebene des Führungs-Radiallagers ausgerichtet ist und einen radialen Fuß-Querdurchmesser aufweist, der größer als ein Lagerinnendurchmesser ist, der durch diagonalen freien Abstand der ersten Lagerelemente, die an dem Führungs-Sitzring angeordnet sind, bestimmt ist. Dadurch ist ausgeschlossen, dass die korrespondierenden Lagerelemente nur axial in die Lagersitz-Lagerebene hineinführbar bzw. herausführbar sind. Zudem entspricht der radiale Fuß-Querdurchmesser dem Innendurchmesser des Führungs-Sitzrings, so dass zwischen dem Führungs-Sitzring und dem Fußquerelement eine Spielpassung zum Einsetzen und Entnehmen des Ventilkörpers in den bzw. aus dem Führungs-Sitzring ausgebildet ist. Vorteilhaft ist der Durchmesser des Ventil-Stegteils gleich dem Fuß-Querdurchmesser.

Eine besonders bevorzugte und vorteilhafte Ausführung, die aufgrund der erfindungsgemäßen Schlüsselverbindung erreicht wird, besteht darin, dass der Ventilkörper mit dem Ventilkopf, dem Ventilfuß und dem Ventilstegteil einstückig, zum Beispiel als Gussteil, Dreh- und/oder Frästeil, ausgebildet ist. Verbindungsmaßnahmen und Verbindungsstellen zwischen zwei oder mehr Teilen des Ventilkörpers entfallen. Dieser lässt sich daher mit einem Strömungsprofil versehen, das von Störungen durch Verbindungen wie insbesondere Schraub- oder Bolzenverbindungen vollständig befreit ist und besonders gestaltet werden kann. Zudem lässt sich der einstückige Profilkörper besonders einfach und präzise herstellen. Eine Montage des Ventilkörpers zu seiner Herstellung entfällt. Die Bauform der Ventil-Baueinheit ist infolgedessen optimal reduziert. Das mit einer solchen Ventil-Baueinheit ausgestattete Trockenkupplungs-Aufnahmeteil erhält eine besonders lange Standzeit, und auch Wartung wird reduziert, da Montageverbindungen an dem Ventilkörper entfallen, die stör- und beschädigungsanfällige Stellen bilden. Hinsichtlich der Einstückigkeit wird unter dem Ventilkopf auch ein mantelförmiger Körperteil verstanden, der stegseitig unter einer Kopffläche liegt und bei geschlossenem Aufnahmeteil-Ventil in den Ventilsitz einfasst und den Führungs-Sitzring durchfasst. Das heißt, dass Bestandteil eines einstückigen Ventilkörpers auch ein Ventilkopf ist, der an seiner äußeren, dem Führungs-Sitzring abgewandten Stirnseite mit einer Kopfplatte oder dergleichen abschließt. Mit dieser bleibt der Ventilkörper zur Montage/Demontage der Ventilbaueinheit einteilig, und das Strömungsprofil wird nicht beeinträchtigt.

Die erfindungsgemäße Ventil-Baueinheit lässt sich vorteilhaft in Form eines Moduls insbesondere dadurch in ein Aufnahmeteil integrieren, dass eine Innenwand der Steuerhülse der Aufnahmeteil-Steuereinrichtung und die Sitzring-Innenwand des Führungs-Sitzrings den Fluid-Durchgangsraum mit gleichem Kreisquerschnitt bilden, der einen gemeinsamen Innendurchmesser bestimmt. Eine besondere Anpassung zur Ausbildung des Aufnahmeteils kann darin bestehen, dass der Ventilkörper einen Axialteil aufweist, der durch den Ventilstegteil und den Ventilfuß gebildet ist, und dass zwischen dem Axialteil und der Innenwandung des Fluid-Durchgangsraums, der durch die Steuerhülse und den Führungs-Sitzring gebildet ist, eine Spielpassung ausgebildet ist.

Die erfindungsgemäße Ventil-Baueinheit stellt ein kompaktes Modul dar, das zum Einsetzen in das Aufnahmeteil bzw. umgekehrt zur Entnahme bereits mit den Steuerelementen der Aufnahmeteil-Steuereinrichtung bestückt werden kann. Das erfindungsgemäße Aufnahmeteil ist zu diesem Zweck derart angepasst und ausgebildet, dass die Führungskulisse der Steuerhülse an ihrer dem ersten Gehäuseende des Aufnahmeteilgehäuses zugewandten Seite zum Einsetzen und Entnehmen der Steuerelemente der Aufnahmeteil-Steuereinrichtung axial offen ist, wobei die vorgefertigte Ventil-Baueinheit die Steuerelemente umfasst, die an den Ventilfuß des Ventilkörpers angesetzt sind.

Die Modul-Bauform des Aufnahmeteils wird weiter dadurch verbessert, dass wesentliche Modul-Bauteile separat durch das Aufnahmeteilgehäuse, die Steuerhülse und die erfindungsgemäße Ventil-Baueinheit gebildet sind. Um das modulare Zusammenfügen des Aufnahmeteils bzw. dessen Zerlegung besonders zu gestalten, sind das Aufnahmeteilgehäuse und die Steuerhülse mittels einer lösbaren, Spiel belassenden Formschlussverbindung aneinander gefügt. Zum Zusammensetzen bzw. Trennen der Module sind keine besonderen Fertigungsschritte erforderlich. Die Handhabung erfordert kein besonderes Werkzeug.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und-möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbständiges Detailbeispiel für andere nicht oder nicht vollständig beschriebene, unter die Erfindung fallende Ausführungen und Gestaltungen zu verstehen. Im Folgenden wird mit der Angabe "allgemein" ein solches Merkmal bezeichnet und verstanden, das isoliert von anderen Merkmalen eines oder mehrerer Ausführungsbeispiele zu dem erfindungsgemäßen Erfolg der allgemeinen Lehre der Erfindung beiträgt.

Es zeigen
- Fig. 1A, 1B: im Längsschnitt eine mit einer erfindungsgemäßen Ventil-Baueinheit ausgestattete Trockenkupplung mit geschlossenen und geöffneten Ventilen,
- Fig. 2A, 2B: im Längsschnitt ein mit der Ventil-Baueinheit ausgestattetes Aufnahmeteil der Trockenkupplung gemäß Fig. 1A, 1B mit geschlossenem und geöffnetem Ventil,
- Fig. 3: in axonometrischer Explosionsdarstellung Teile der Trockenkupplung gemäß Fig. 1A und 1B,
- Fig. 4A, 4B, 5A-5D, 6A 6B, 7A, 7B: in Längsansicht und Stirnansicht, teilweise geschnitten, eine erfindungsgemäße Ventil-Baueinheit in der Phase ihrer Montage sowie im fertiggestellten Zustand (Fig. 7A, 7B), und
- Fig. 8A, 8B: eine Steuerhülse des Aufnahmeteils gemäß Fig. 2A, 2B mit um ihre Achse um 90° versetzten Ansichten.

In der Zeichnung wird eine erfindungsgemäße Ventil-Baueinheit 1 sowohl in der Einbauposition und -anordnung in einer Trockenkupplung 100 als auch davon getrennt dargestellt, nämlich in der Phase der Montage oder Demontage und als in zusammengebautem Zustand selbständige Einrichtung, die als solche ein eigenständiges Modulteil eines Aufnahmeteils (Mutterteil) 6 der Trockenkupplung 100 bildet.

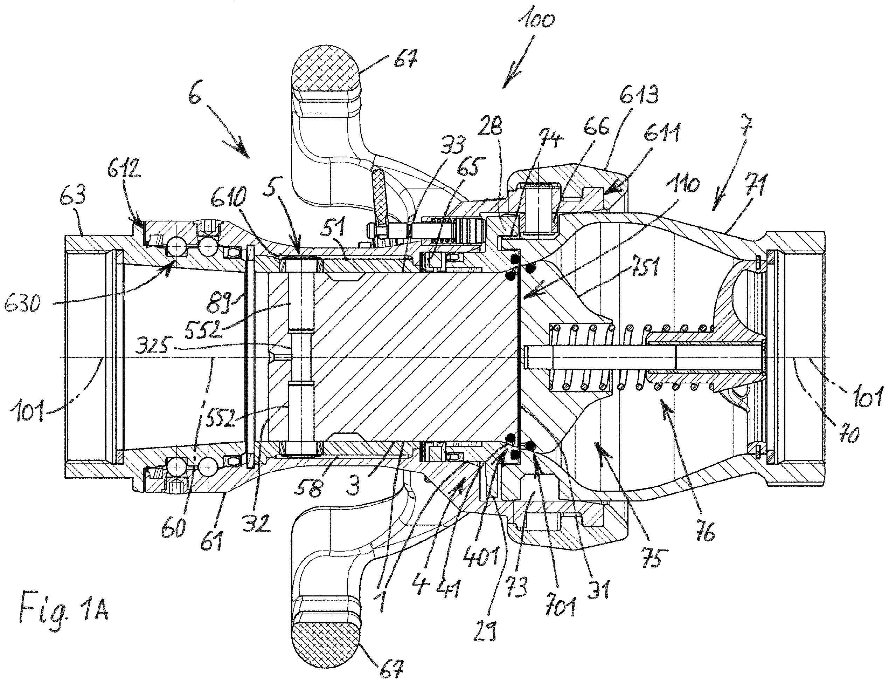

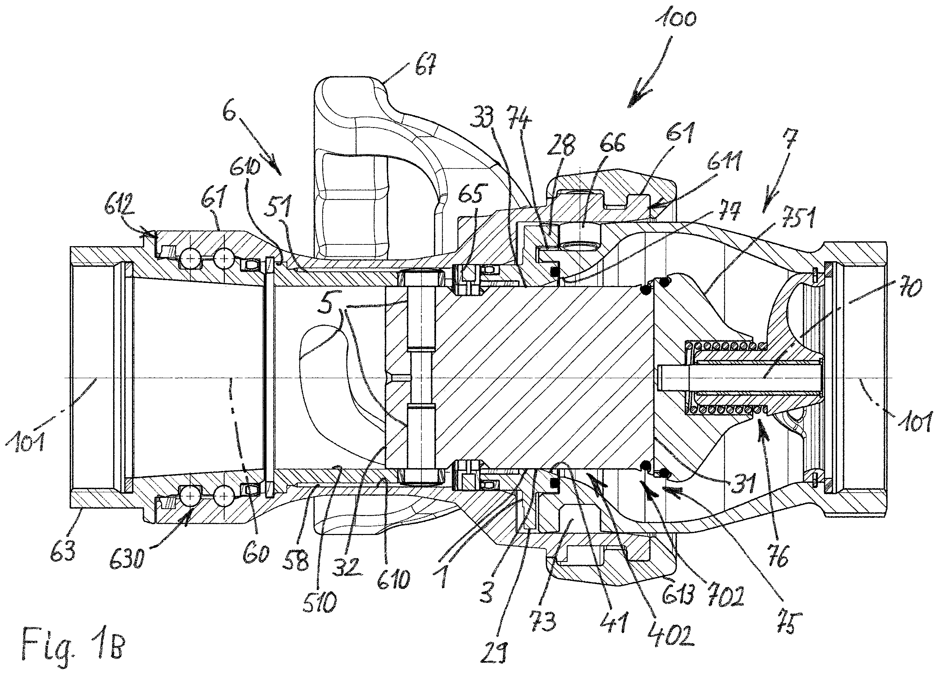

Die in Fig. 1A und 1B in gekuppeltem Zustand dargestellte Trockenkupplung 100 weist das Aufnahmeteil 6 (Mutterteil) und ein Steckteil 7 (Vaterteil) auf, die Kupplungshälften bilden. Das Aufnahmeteil 6 und das Steckteil 7 sind im Bereich einer Kupplungs-Trennstelle 110 aneinander gekuppelt. Eine Aufnahmeteilachse 60 und eine Steckteilachse 70 fallen in einer Kupplungsachse 101 zusammen. Im Kupplungszustand liegen an der Trennstelle 110 ein Aufnahmeteil-Ventilkörper 3 eines Aufnahmeteil-Ventils 4 und ein Steckteil-Ventilkörper 751 eines Steckteil-Ventils 75 aneinander, wobei sie sich in einem in der Kupplungsachse 101 verlagerbaren Schiebeverbund befinden. Der Steckteil-Ventilkörper 751 ist in einem SteckteilGehäuse 71 gegen Federkraft einer Druckkrafteinrichtung 76 axial schiebebewegbar gelagert. Der Aufnahmeteil-Ventilkörper 3 ist innerhalb eines rohrförmigen Aufnahmeteilgehäuses 61 gelagert und in Axialrichtung in definierte Positionen translatorisch bewegbar. Eine Aufnahmeteil-Steuereinrichtung 5 setzt eine Drehbewegung des Aufnahmeteilgehäuses 61 um die Kupplungsachse 101 in die translatorische Bewegung um. Gehäuse-Handgriffe 67 sind an dem Aufnahmeteilgehäuse 61 zur Drehverstellung angebracht.

In Fig. 1A befinden sich die Ventilkörper 3, 751 in Schließpositionen 401, 701 der Ventile 4 und 75. Fluid-Durchgang wird infolgedessen gesperrt. Der Aufnahmeteil-Ventilkörper 3 weist einen Ventilkopf 31 auf, der bei geschlossenem Aufnahmeteil-Ventil 4 in einen Aufnahmeteil-Ventilsitz 41 einfasst. An der Trennstelle 110 fasst der Steckteil-Ventilkörper 751 entsprechend in einen Steckteil-Ventilsitz 77 ein. Im Schließzustand der Ventile 4, 75 gemäß Fig. 1A können die Kupplungshälften durch Lösen von Anschlusselementen 66, 73, die sie verbinden, voneinander getrennt werden.

Ebenfalls ausgehend von dem Kupplungszustand gemäß Fig. 1A können die Ventile 4, 75 zum Durchleiten von Fluid durch die Trockenkupplung 100 geöffnet werden. Infolge einer definierten Drehverstellung einer Steuerhülse 51 der Aufnahmeteil-Steuereinrichtung 5, die drehfest mit dem Aufnahmeteilgehäuse 61 verbunden ist, wird der Ventilkörper 3 axial verlagert, so dass der Ventilkopf 31 den Ventilsitz 41 in einer Aufnahmeteil-Ventilöffnungsposition 402 verlässt und den Steckteil-Ventilkörper 751 gegen die Federkraft der Druckkrafteinrichtung 76 in eine Steckteil-Ventilöffnungsposition 702 axial verschiebt. Mittels der Steuereinrichtung 5 wird die Lage des Ventil-Schiebeverbunds zum Öffnen der Ventile 4, 75 definiert und beibehalten. Dieser Zustand ist in Fig. 1B dargestellt. Zum Schließen der Ventile 4, 75 wird der Ventil-Schiebeverbund durch umgekehrte Drehverstellung der Steuerhülse 51 unter der Kraft der Druckkrafteinrichtung 76 wieder in die Position gemäß Fig. 1A zurückgesetzt.

An dem ersten Gehäuseende 611 des Aufnahmeteilgehäuses 61 ist eine Schutzmanschette 613 angebracht. Zwischen den Teilen der Ventile 4, 75 und den anderen Teilen der beiden Kupplungshälften sind jeweils übliche Dichtungselemente angeordnet.

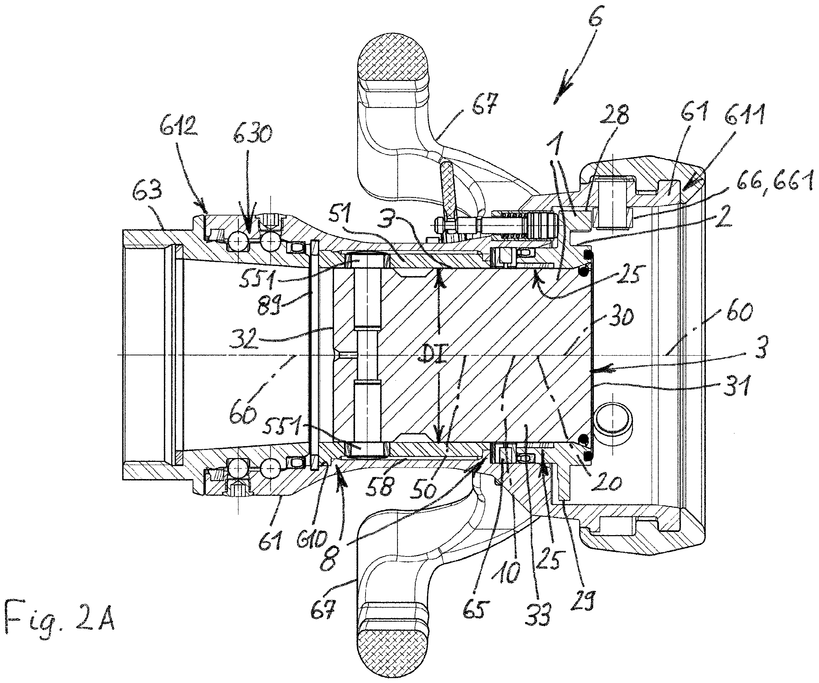

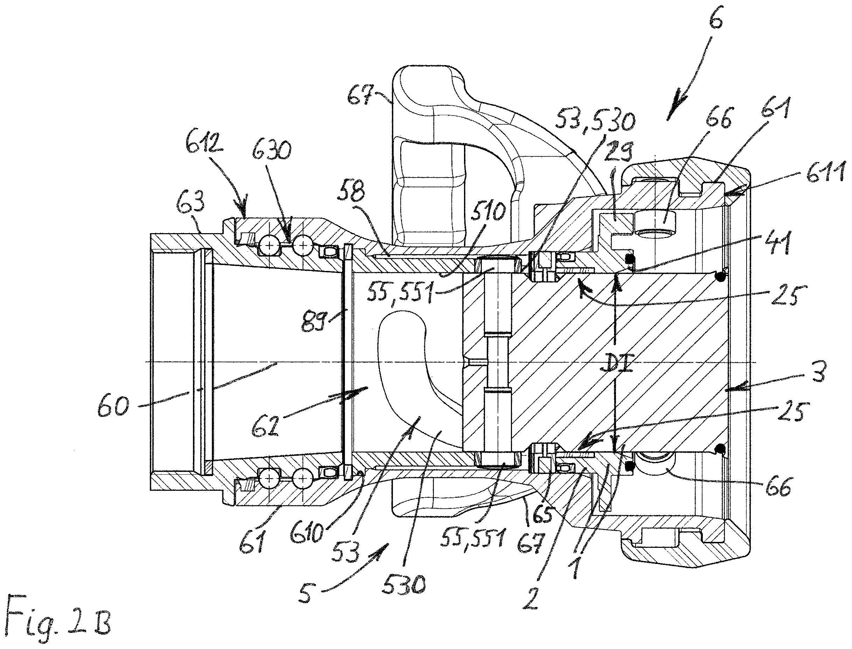

Anhand der Fig. 2A und 2B ist das Trockenkupplungs-Aufnahmeteil 6 detaillierter dargestellt. In Fig. 2A befindet sich das Aufnahmeteil-Ventil 4 in geschlossenem Zustand 401, während in Fig. 2B die Öffnungsposition 402 dargestellt ist.

Das Trockenkupplungs-Aufnahmeteil 6 weist drei wesentliche Bauteile auf, die besonders einfach handhabbare Module zum Montieren und Demontieren des Aufnahmeteils 6 bilden. So setzt sich das Aufnahmeteil 6 aus dem Aufnahmeteilgehäuse 61, der Steuerhülse 51 und einer erfindungsgemäßen Ventil-Baueinheit 1 zusammen.

Allgemein werden stirnseitige Seiten, Enden und Bereiche von sich axial erstreckenden Bauelementen, die der Kuppelseite des Trockenkupplungs-Aufnahmeteils 6 zugewandt sind oder im Bereich der Kuppelseite liegen, mit "vorderseitig" oder "Vorderseite" beschrieben, während entgegengesetzt liegende Enden, Seiten oder Bereiche mit "rückseitig" oder "Rückseite" bezeichnet werden.

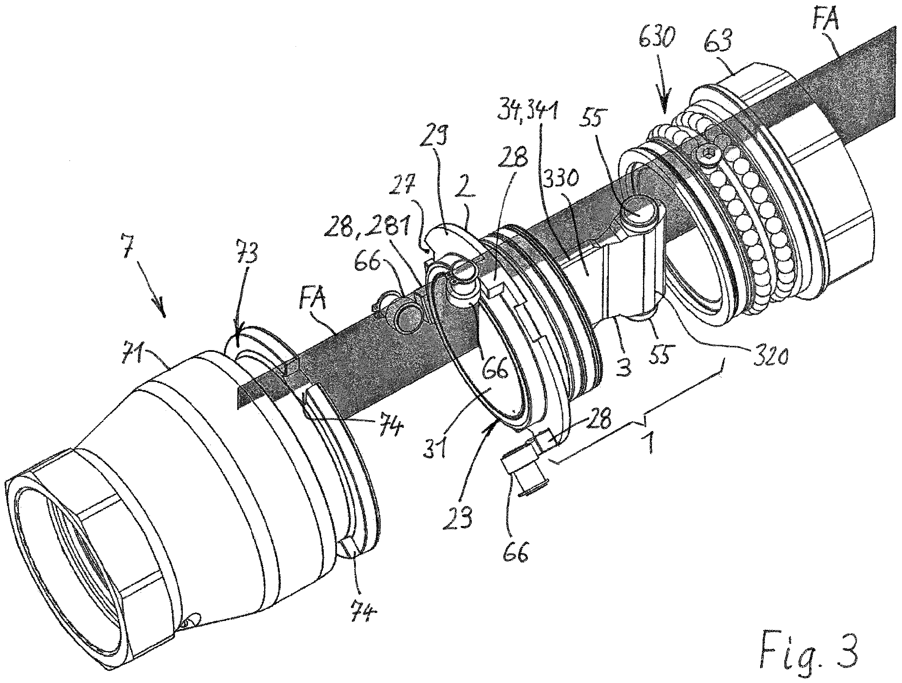

Das erste Gehäuseende 611, das die Vorderseite des Aufnahmeteilgehäuses 61 bildet, ist zum Kuppeln mit dem Trockenkupplungs-Steckteil 7 eingerichtet. Ein zweites Gehäuseende 612, das die Stirnrückseite des Aufnahmeteilgehäuses 61 bildet, ist zur Verbindung mit einem nicht dargestellten Leitungs- oder Schlauchelement eingerichtet. Im Ausführungsbeispiel ist das Aufnahmeteilgehäuse 61 mit einem Drehgelenkteil 63 bestückt, das an dem rückseitigen Gehäuseende 612 mittels eines Kugellager-Drehgelenks 630 um die Aufnahmeteilachse 60 drehbar gelagert und zum Anschluss an eine Leitung eingerichtet ist. An dem vorderen Gehäuseende 611 sind innenliegend Anschlusselemente 66, nämlich Anschluss- oder Trennrollen 661 angeordnet, die zum Verbinden mit dem Kupplungs-Steckteil 7 in das Anschlusselement 73, nämlich in eine umlaufende Anschlussnut des Steckteils 7 setzbar sind. Ein Flanschrand des Steckteils 7 weist Anschlussausnehmungen 74 auf, durch die die Anschlusselemente 66 hindurchgesetzt und durch die Drehverstellung des Aufnahmeteilgehäuses 61 in der Anschlussnut gefangen werden. Positionierung und Zuordnung gehen insbesondere aus Fig. 3 hervor.

Die Steuerhülse 51 der Steuereinrichtung 5 ist konzentrisch in das Aufnahmeteilgehäuse 61 eingesetzt und weist einen Hülsen-Außendurchmesser auf, der einem Innendurchmesser des Aufnahmeteilgehäuses 61 entspricht, derart, dass zwischen dem Aufnahmeteilgehäuse 61 und der Steuerhülse 51 ein Umfangsspalt bleibt, der sicherstellt, dass die Aufnahmehülse 51 frei oder leichtgängig in das Aufnahmeteilgehäuse 61 einsetzbar ist. Wie aus Fig. 2A und 2B ersichtlich, ist die Steuerhülse 51 an dem rückseitigen, zweiten Gehäuseende 612 in das Aufnahmeteilgehäuse 61 einführbar.

Zwischen dem Aufnahmeteilgehäuse 61 und der Steuerhülse 51 ist eine schraub- und klemmfreie Steuerhülsen-Steckverbindung 8 ausgebildet. Die Steuerhülse 51 weist an ihren stirnseitigen Rändern Ausnehmungen und Vorsprünge auf, die formschlüssig in entsprechende Ausnehmungen und Vorsprünge an der Innenwand des Aufnahmeteilgehäuses 61 einfassen. Auf diese Weise ist die Steuerhülse 51 drehfest mit dem Aufnahmeteilgehäuse 61 verbunden und an ihren beiden Stirnenden in Richtung zum kuppelseitigen Gehäuseende 611 gegen Anschläge axial gelagert. Die Steuerhülse 51 ist an ihrer Rückseite mittels eines Sicherungselements 89 in Form eines Sicherungsrings an dem Aufnahmeteilgehäuse 61 festgesetzt, der einfach anzubringen und zu entfernen ist. Die Steuerhülse kann auch auf andere Weise, zum Beispiel mittels Klemm-, Schraub- und/oder Stiftverbindung, mit dem Aufnahmeteilgehäuse verbunden sein. Auch können das Aufnahmeteilgehäuse und die Steuerhülse einstückig, zum Beispiel in einem Gussteil vereinigt sein.

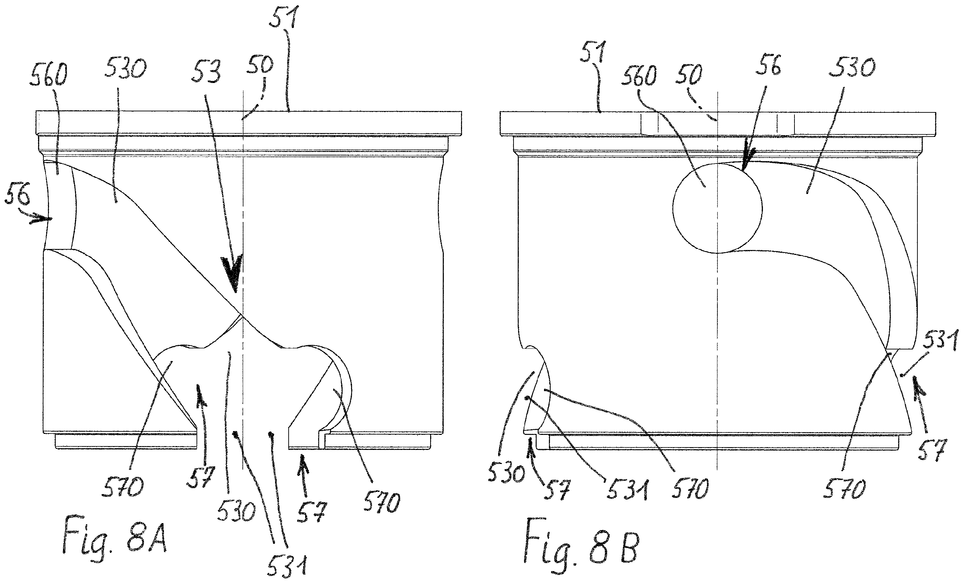

Das Maß der Drehverstellung der gemeinsam mit dem Aufnahmeteilgehäuse 61 um die Aufnahmeteilachse 60 drehbaren Steuerhülse 51 sowie des damit bewirkten translatorischen Hubs des Ventilkörpers 3 werden durch eine Führungskulisse 53 mit zwei Steuerkurven 530 bestimmt. Wie aus Fig. 8A, 8B ersichtlich, sind die beiden Steuerkurven 530 im Umfangsabstand von 180° versetzt angeordnet, wobei sie sich in gleicher Form und Ausrichtung von einem geschlossenen inneren Steuerkurvenende 56 helixförmig zu einem offenen äußeren Steuerkurvenende 57 hin erstrecken. Die offenen äußeren Steuerkurvenenden 57 sind an der Vorderseite der Steuerhülse 51 mit axialen Kulissenöffnungen 531 axial offen. Die axiale Länge der Steuerhülse 51 ist derart bemessen, dass an der Vorderseite der Steuerhülse 51 ein Führungs-Sitzring 2 unter Zwischenschaltung eines Sitzring-Federelements 65 anschließt und in dem Aufnahmeteilgehäuse 61 Platz findet. Der Führungs-Sitzring 2 und die Steuerhülse 51 bilden die Innenwandung eines Fluid-Durchgangsraums 62. Eine Innenwand 510 der Steuerhülse 51 und eine Sitzring-Innenwand 21 weisen einen gemeinsamen Innendurchmesser DI auf.

Die Steuereinrichtung 5 weist weiterhin Steuerelemente 55 auf, zum Beispiel in Form von durch Steuerrollen 551 gebildeten Steuerköpfen, die allgemein an einem rückwärtigen Teil des Ventilkörpers 3 angeordnet sind und in die Steuerkurven 530 einfassen. Zweckmäßig bildet die Führungskulisse 53 eine Führung, die den maximalen Hub des Ventilkörpers 3 infolge einer Drehverstellung der Steuerhülse 51 von mindestens 90°, vorzugsweise von 100°bis etwa 120°bewirkt.

Der Ventilkörper 3, die Steuerhülse 51 und der Führungs-Sitzring 2 weisen zugehörige zentrale Körperachsen 30, 50 und 20 auf, die koaxial mit der Aufnahmeteilachse 60 sind. Das Aufnahmeteilgehäuse 61, die Steuerhülse 51, der Führungs-Sitzring 2 und der Ventilkopf 31 sind Teile oder Abschnitte mit kreisförmigen Querschnitten.

Die erfindungsgemäße Ventil-Baueinheit 1 sowie ein Verfahren zur Montage gemäß Ausführungsbeispiel werden insbesondere anhand von Fig. 3 und Fig. 4A bis 7B näher beschrieben.

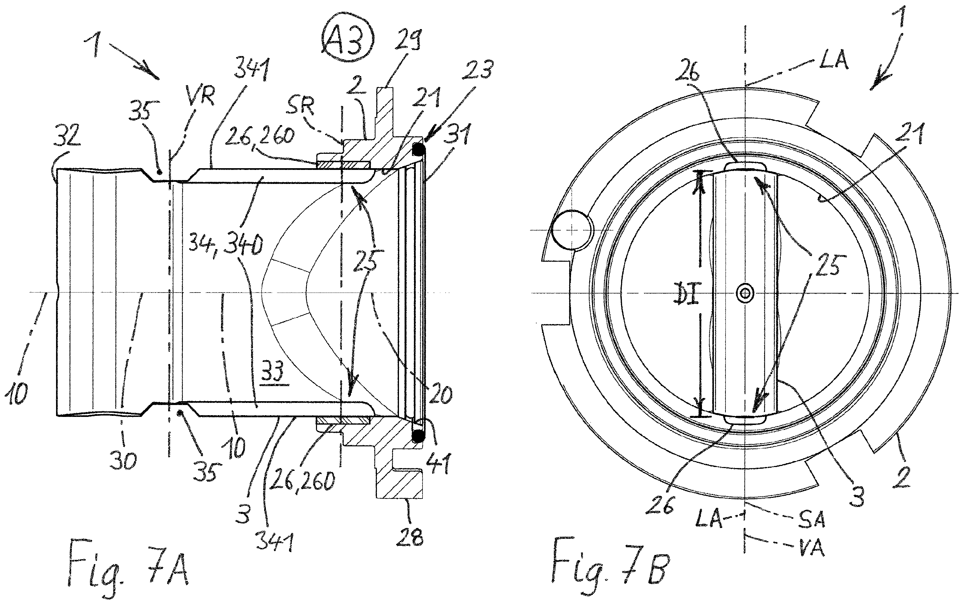

Die Ventil-Baueinheit 1, wie sie in einer Schiebeposition in Fig. 7A, 7B dargestellt ist, ist ein vorgefertigtes Bauteil, das als solches in das Aufnahmeteilgehäuse 61 eingebracht wird. Die Ventil-Baueinheit 1 umfasst den Führungs-Sitzring 2 mit der Sitzring-Innenwand 21 und den Ventilkörper 3. Der Ventilkörper 3 ist mittels eines Führungs-Radiallagers 25 an der Sitzring-Innenwand 21 radial gelagert, wobei er entlang einer zentralen Körperachse 10 der Ventil-Baueinheit 1 zur translatorischen Verstellbewegung axial gleitbewegbar ist. An einem ersten, vorderen Sitzringende 23 ist der Ventilsitz 41 ausgebildet.

Wie insbesondere aus Fig. 3 ersichtlich, sind an dem Sitzringende 23 mit Umfangsabstand von 120° drei stirnseitig vorspringende Anschlusselemente 28 in Form von Nocken ausgebildet, denen die drei Gehäuse-Anschlusselemente 66 zugeordnet sind. Die Anschlusselemente 28 sind an einem vorderseitigen Außenrand 29 des Führungs-Sitzrings 2 ausgebildet. Die Zuordnung und Anordnung ist derart, dass die Sitzring-Anschlusselemente 28 und die Gehäuse-Anschlusselemente 66 zum Kuppeln und Trennen der Kupplungshälften axial miteinander fluchten. Wie aus Fig. 1A, 2A ersichtlich, wird der Führungs-Sitzring 2 im Aufnahmeteilgehäuse 61 zwischen den Anschlusselementen 66 und dem Sitzring-Federelement 65 gefangen gehalten. In Fig. 3 ist nur eine Flucht-Axialebene FA dargestellt. Man erkennt, dass die Sitzring-Anschlusselemente 28 in die Steckteil-Anschlussausnehmungen 74 einfassen, wenn die Kupplungshälften aneinander gekuppelt sind. Dadurch ist der Führungs-Sitzring 2 zum Kuppeln und während des Kuppelns in eine Sperrposition setzbar, die relative Drehung zwischen dem Führungs-Sitzring 2 und dem Steckteilgehäuse 71 sperrt.

Der Ventilkörper 3 ist allgemein ein ausschließlich außenumströmbarer Fluid-Strömungskörper. Er weist den Ventilkopf 31, einen Ventilfuß 32 sowie einen mittels des Führungs-Radiallagers 25 an der Sitzring-Innenwand 21 gelagerten Ventilstegteil 33 auf, der den Ventilkopf 31 und den Ventilfuß 32 miteinander verbindet und axial beabstandet. Das Führungs-Radiallagers 25 sperrt zwischen dem Führungs-Sitzring 2 und dem Ventilkörper 3 relative Drehung, während es die relative axiale Gleitbewegbarkeit zulässt.

Erste Lagerelemente 26 mit U-förmigen Gleitaufnahmen 261, die an der Sitzring-Innenwand 21 hervorstehen, und zweite Lagerelemente 34, die an dem Ventilstegteil 33 ausgebildet sind, fassen korrespondierend axial und radial ineinander und bilden dadurch durch Überlappung einen Lagersitz. Die korrespondierenden Lagerelemente 26, 34 sind durch Lagerelement-Paare gebildet, die jeweils ein nasenförmiges Lagerelement 260 und ein schienenförmiges Lagerelement 340 aufweisen.

Die beiden Lagerelement-Paare sind im Umfangsabstand von 180° angeordnet, wobei an der Sitzring-Innenwand 21 die nasenförmigen Lagerelemente 260 gegenüberliegend hervorstehen und die schienenförmigen Lagerelemente 340 Lagerränder 341 sind, die an dem Ventilstegteil 33 ausgebildet sind. In einer zu dem Lagersitz gehörenden Lagersitz-Lagerebene LA fallen eine axiale Sitzring-Lagerebene SA, in der die nasenförmigen Lagerelemente 260 liegen, und eine axiale Ventilkörper-Lagerebene VA, in der die schienenförmigen Lagerelemente 340 liegen, zusammen, (Fig. 7A, 7B).

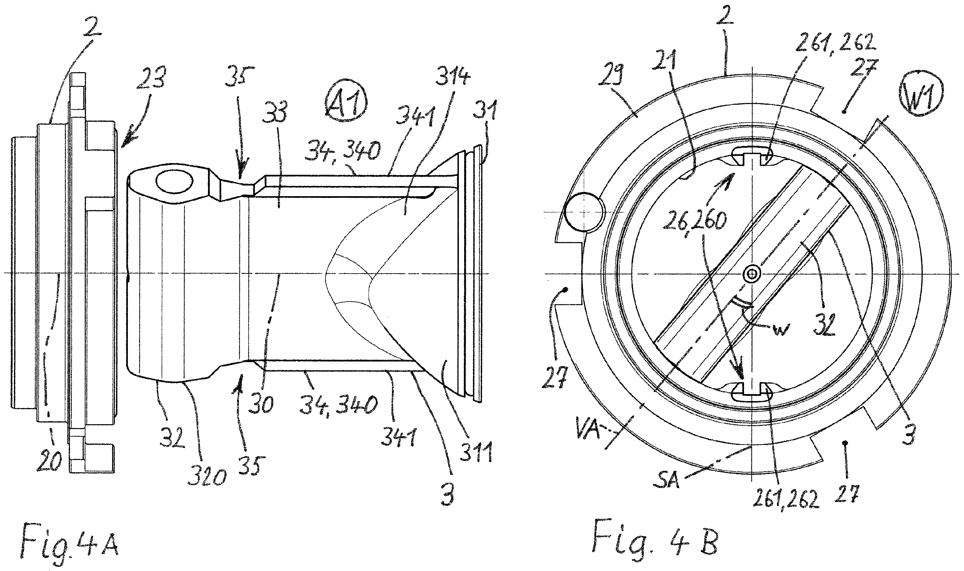

Zwischen den nasenförmigen Lagerelementen 260 und den schienenförmigen Lagerelementen 340 ist eine besondere erfindungsgemäße Schlüsselverbindung eingerichtet. Diese ist im Ausführungsbeispiel dadurch gebildet, dass an den schienenförmigen Lagerelementen 340 im Bereich zwischen dem Ventilstegteil 33 und dem Ventilfuß 32 Montageausnehmungen 35 ausgebildet sind, die zur Montage und Demontage der Ventil-Baueinheit 1 durch relative Drehverstellung und Axialverstellung zwischen dem Führungs-Sitzring 2 und dem Ventilkörper 3 mit den zugehörigen nasenförmigen Lagerelementen 260 in deckungsgleiche Montagepositionen setzbar sind. Dies geht insbesondere aus den Fig. 4A bis 7B hervor. Allgemein sind die Montageausnehmungen 35 zur Aufnahme der nasenförmigen Lagerelemente formgleich mit diesen. Eine Eigenart der Schlüsselverbindung besteht allgemein darin, dass in jedem Paar das eine, nasenförmige Lagerelement 260 und das andere, schienenförmige Lagerelement 340 innerhalb des Führungs-Sitzrings 2 auf dem Weg über die Montagepositionen axial in die Überlappungsverbindung setzbar bzw. aus dieser herausführbar sind, wobei das nasenförmige Lagerelement 260 in die Montageausnehmung 35 an dem schienenförmigen Lagerelement 340 gelangt. Dort befinden sich das nasenförmige Lagerelement 260 und die Montageausnehmung 35 in deckungsgleicher freier Position. Das nasenförmige Lagerelement 260 ist durch relativen Drehversatz zwischen dem Führungs-Sitzring 2 und dem Ventilkörper 3 innerhalb des Führungs-Sitzrings 2 in die Montageausnehmung 35 hinein- bzw. aus ihr herausbewegbar. Außerhalb der deckungsgleichen Position liegen das nasenförmige Lagerelement 260 und das schienenförmige Lagerelement 340 in zwei unterschiedlichen Axialebenen. Das heißt, dass die axiale Sitzring-Lagerebene SA, in der die nasenförmigen Lagerelemente 260 liegen, mit der axialen Ventilkörper-Lagerebene VA, in der die schienenförmigen Lagerelemente 340 liegen, nicht mehr zusammenfallen.

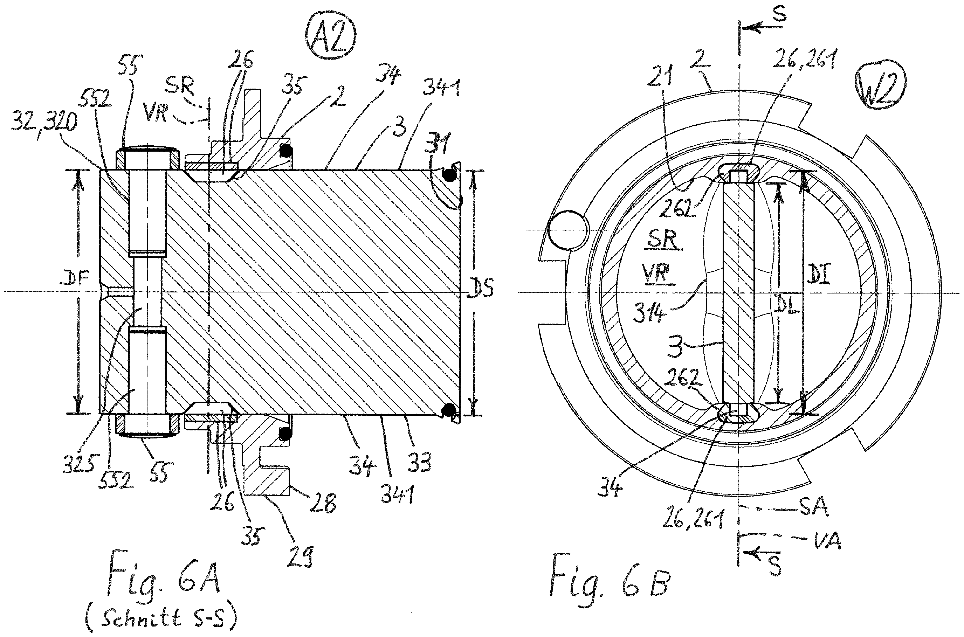

Der Ventilkörper 3 kann insbesondere dank der erfindungsgemäßen Schlüsselverbindung besonders gestaltet werden, wie aus dem Ausführungsbeispiel hervorgeht. Er ist aus einem Stück z.B. in Form eines Guss- oder Frästeils gebildet. Der Ventilstegteil 33 ist ein plattenförmiges Stegelement 330 in Form eines Schwerts. Die Ränder des Stegelements 330 sind die Lagerränder 341. Der Ventilfuß 32 ist durch ein radiales Fußquerelement 320 gebildet, nämlich durch eine flossenartige Verdickung, in die das schwertförmige Stegelement 330 übergeht. Das Fußquerelement 320 ist wie das Stegelement 330 in der Lagersitz-Lagerebene LA der schienenförmigen Lagerelemente 340 angeordnet und weist einen Fuß-Querdurchmesser DF auf, der größer als ein Lagerinnendurchmesser DL ist, der durch den radialen, diagonalen freien Abstand der ersten Lagerelemente 260 bestimmt ist, wie dies insbesondere aus Fig. 6A und 6B ersichtlich ist. Dies ist ein allgemeines Merkmal. Im Ausführungsbeispiel ist auch der radiale Querdurchmesser DS gleich dem Fuß-Querdurchmesser DF. Der Querdurchmesser DS ist das Abstandsmaß zwischen den Lagerrändern 341. Es entspricht dem korrespondierenden Abstandsmaß zwischen den Stegen der U-förmigen Gleitaufnahmen 261. Die Gleitaufnahmen 261 werden insbesondere durch austauschbare Gleitschuhe 262 gebildet.

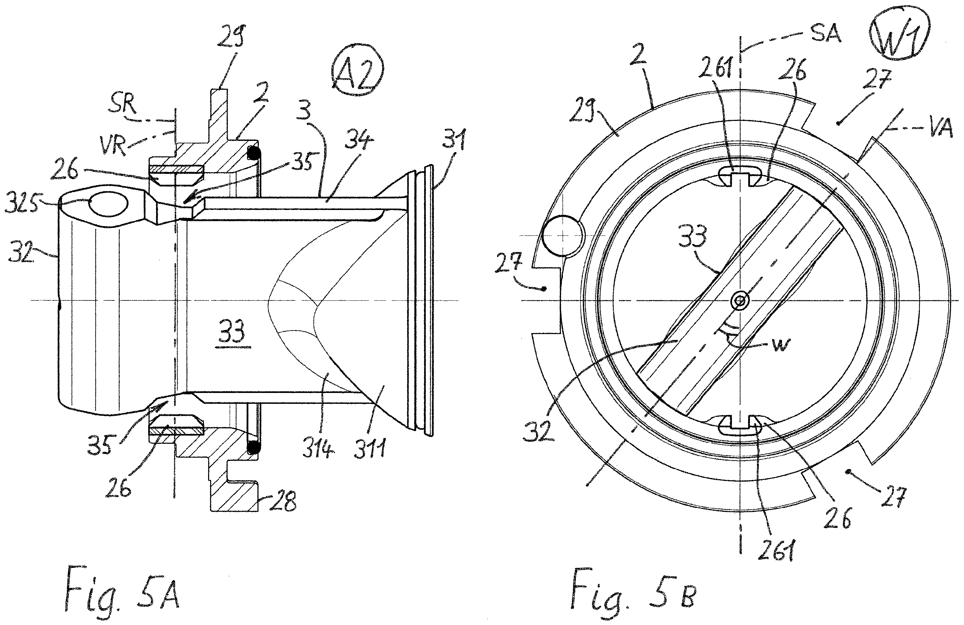

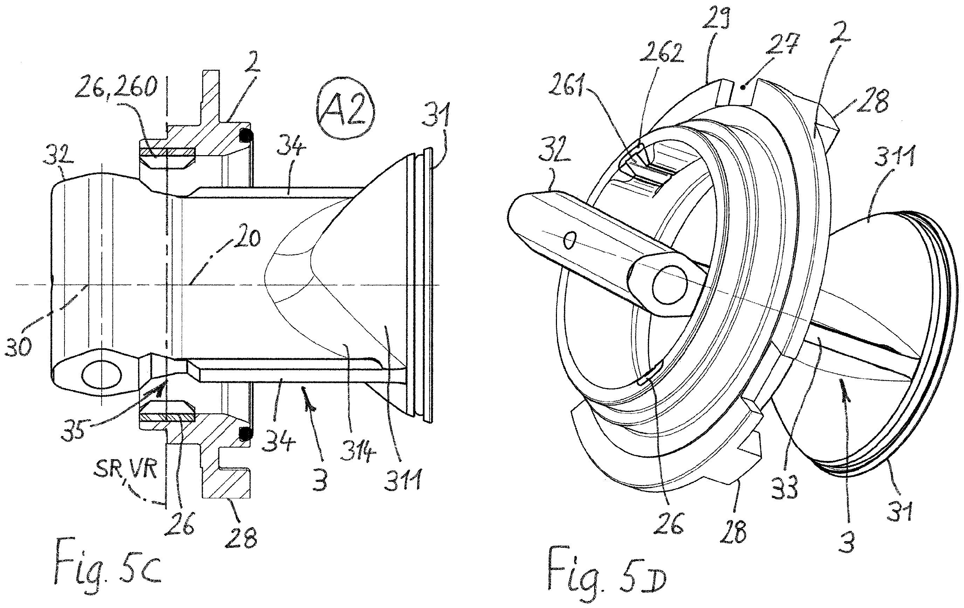

Der einstückige Ventilkörper 3, der als solcher frei von zusammenzusetzenden Teilen ist, bildet mit dem Ventilfuß 32, dem Ventilstegteil 33 und dem Ventilkopf 31 ein besonders günstiges Fluid-Strömungsprofil. Wie insbesondere aus Fig. 4A, 5A, 5C und 5D ersichtlich, ist die dem ersten Sitzringende 23 zugewandte Innenseite des Ventilkopfes 31 als konvexe Kopfkuppe 311 geformt, in die das flache Stegelement 330 mit glatter, kehlenartiger Fläche 314 übergeht.

Der Ventilfuß 32 weist eine zylindrische Form mit ovalförmiger Grundfläche auf. Der Ventilfuß 32 ist allgemein zum Anbringen der Steuerelemente 55 eingerichtet, die in die Steuerkurven 530 der Führungskulisse 53 einfassen. Im Ausführungsbeispiel sind Steuerrollen 551 an die stirnseitigen Enden des Ventilfußes 32 ansetzbar. In dem Ventilfuß 32 ist eine radiale Durchgangsbohrung 325 eingebracht, die zum Lagern von Lagerbolzen 552 der Steuerrollen 551 eingerichtet ist. Die Rollen-Lagerbolzen 552 sind lösbar in die um 180° gegenüberliegenden Lagerlöcher der Durchgangsbohrung 325 einsetzbar.

Anhand der Figuren 4A bis 7B wird die Fertigung der Ventil-Baueinheit 1 näher beschrieben und die Beschreibung der Bestandteile der Ventil-Baueinheit 1 ergänzt.

Die Ventil-Baueinheit 1 wird außerhalb des Aufnahmeteilgehäuses 61 des Trockenkupplungs-Aufnahmeteils 6 montiert. Wie in Fig. 4A, 4B dargestellt, werden der Führungs-Sitzring 2 und der Ventilkörper 3 in einer ersten Axialposition A1 mit ihren zentralen Körperachsen 20, 30 fluchtend koaxial ausgerichtet. Der Ventilfuß 32 befindet sich vor dem ersten Sitzringende 23. Wie ebenfalls aus Fig. 4A, 4B ersichtlich, werden der Führungs-Sitzring 2 und der Ventilkörper 3 in der Axialposition A1 durch Relativdrehung zueinander in eine erste Umfangs-Winkelposition W1 gebracht, in der sich die axialen Lagerebenen SA und VA in unterschiedlichen Drehpositionen befinden. Die Umfangs-Winkelposition W1 ist durch einen zwischen den beiden Lagerebenen SA, VA eingestellten Versatzwinkel w bestimmt. Der Versatzwinkel w wird so gewählt, dass der Ventilkörper 3 mit dem Ventilfuß 32 voraus durch den Führungs-Sitzring 2 setzbar ist. Dies ist dann der Fall, wenn sich der Ventilfuß 32 außerhalb des Bereichs zwischen den gegenüberliegenden ersten Lagerelementen 26 befindet, so dass er an den ersten Lagerelementen 26 vorbei axial durch den Führungs-Sitzring 2 hindurch verlagerbar ist.

Wie aus Fig. 5A, 5B hervorgeht, wird der Ventilkörper 3 in der ersten Umfangs-Winkelposition W1 soweit durch den Führungs-Sitzring 2 gesetzt, dass in einer zweiten relativen Axialposition A2 zwischen dem Ventilkörper 3 und dem Führungs-Sitzring 2 die Radialebene SR, in der die ersten Lagerelemente 26 liegen, und die Radialebene VR, in der die zugehörigen Montageausnehmungen 35 liegen, zusammenfallen. Eine solche Konstellation wird auch in Fig. 5C, 5D dargestellt. Dort ist der Versatzwinkel w, verglichen mit Fig. 5A, 5B, mit entgegengesetzter Drehrichtung vorgesehen.

Der Führungs-Sitzring 2 und der Ventilkörper 3 werden in der zweiten Axialposition A2 durch Relativdrehung zueinander um wenigstens eine ihrer zentralen Körperachsen 20, 30 in eine zweite Umfangs-Winkelposition W2 gebracht, wie aus Fig. 6A, 6B ersichtlich. Der Versatzwinkel w ist Null, so dass die ersten Lagerelemente 26 in den Montageausnehmungen 35 deckungsgleich mit den zugehörigen zweiten Lagerelementen 34 zusammentreffen. Im Ausführungsbeispiel weisen die beiden Montageausnehmungen 35 sowie korrespondierend die beiden nasenförmigen Lagerelemente 260 trapezförmige Gestalt mit axialer Ausrichtung auf, wobei allgemein in der deckungsgleichen Position eine Spielpassung ausgebildet ist.

Ein weiterer Schritt besteht in einem Axialversatz, indem, wie aus Fig. 7A, 7B ersichtlich, der Ventilkörper 3 weiter durch den Führungs-Sitzring 2 hindurchgesetzt wird, wobei die ersten Lagerelemente 26 die zweiten Lagerelemente 34 gleitend aufnehmen. Die ersten Lagerlemente 26 und die zweiten Lagerelemente 34 gelangen in den Lagersitz des Führungs-Radiallagers 25, in dem sie axial und radial überlappen. In Fig. 7A, 7B ist der Ventilkörper 3 in die Position verschoben, in der der Ventilkopf 31 in dem Ventilsitz 41 sitzt. Die Radialebene SR der ersten Lagerelemente 26 und die Radialebene VR der Montageausnehmungen 35 befinden sich in der in Fig. 7A dargestellten Axialposition A3 in maximalem Abstand. Die Dimensionierung des Ventilstegteils 33 ist so, dass der axiale Hub, der zum Öffnen des Aufnahmeteil-Ventils 4 vorgesehen wird, kleiner ist als der maximale Abstand zwischen den Radialebenen SR, VR.

Man erkennt ohne Weiteres, dass die Demontage der Ventil-Baueinheit 1 in der umgekehrten Reihenfolge der zur Montage beschriebenen Schritte erfolgt.

Vorteilhaft werden in einem weiteren Schritt die Steuerelemente 55 an den Ventilfuß 32 angesetzt. Dies kann, wie in Fig. 6A, 6B dargestellt, erfolgen, wenn der Ventilkörper 3 mit dem Ventilfuß 32 durch den Führungs-Sitzring 2 hindurchgesetzt worden ist. Die Ventil-Baueinheit 1 mit daran angesetzten Steuerelementen 55 lässt sich zum Fertigen des in Fig. 2A, 2B dargestellten Trockenkupplungs-Aufnahmeteils 61 einteilig handhaben.

Die Ventil-Baueinheit 1 wird zur Montage mit an den Ventilfuß 32 angesetzten Steuerelementen 55 in das Aufnahmeteilgehäuse 61 eingesetzt, wobei die Steuerelemente 55 in Axialrichtung in die axialen Kulissenöffnungen 531 einführbar sind. Bei diesem Vorgang muss der Außenrand 29 des Führungs-Sitzrings 2 die Gehäuse-Anschlusselemente 66 passieren. Dies gelingt im Ausführungsbeispiel dadurch, dass in den Außenrand 29 drei Randausnehmungen 27 eingebracht sind, die den Sitzring-Anschlusselementen 28 zugeordnet sind. Die Randausnehmungen 27 befinden sich von den Anschlusselementen 28 in einem Umfangsabstand, der dem Umfangsabstand der axialen Kulissenöffnungen 531 von den Steuerkurven-Raststellen 570 entspricht.

Der Führungs-Sitzring 2 der in das Aufnahmeteilgehäuse 61 eingesetzten Ventil-Baueinheit 1 kommt mittels des Sitzring-Federelements 65, wie zum Beispiel einer Druckfeder, gegen den vorderen Rand der Steuerhülse 51 zu liegen. Durch Drehen der Steuerhülse 51 schraubt sich die Ventil-Baueinheit 1 in die Steuerkurven 530 hinein, bis die in Fig. 2A und Fig. 3 dargestellte Position erreicht wird. Das Trockenkupplungs-Aufnahmeteil 6 befindet sich in der zum Trennen und Öffnen der Fluid-Trockenkupplung 100 eingerichteten Position.

## Patentansprüche

1. Vorgefertigte Ventil-Baueinheit (1) zum Einbau in ein Trockenkupplungs-Aufnahmeteil (6), das zum Kuppeln mit einem zugehörigen Trockenkupplungs-Steckteil (7) einer Fluid führenden Trockenkupplung (100) eingerichtet ist;
**(i)** die Ventil-Baueinheit (1) umfasst einen Führungs-Sitzring (2) mit einer Sitzring-Innenwand (21) sowie einen an der Sitzring-Innenwand (21) mittels eines Führungs-Radiallagers (25) radial gelagerten und entlang der zentralen Körperachse (10) der Ventil-Baueinheit (1) axial gleitbewegbaren Ventilkörper (3), wobei der Führungs-Sitzring (2) ein erstes Sitzringende (23) aufweist und zum Kuppeln in eine gegen Drehung um seine zentrale Körperachse (20) gesicherte Sperrposition setzbar ist;
**(ii)** der Ventilkörper (3) weist einen Ventilkopf (31), einen Ventilfuß (32) sowie einen mittels des Führungs-Radiallagers (25) an der Sitzring-Innenwand (21) gelagerten Ventilstegteil (33) auf, der den Ventilkopf (31) und den Ventilfuß (32) miteinander verbindet und axial beabstandet, wobei der außerhalb des Führungs-Sitzrings (2) liegende Ventilfuß (32) zur Drehmoment-Beaufschlagung mit Steuerelementen (55) verbindbar ist;
**(iii)** der Führungs-Sitzring (2) weist an dem ersten Sitzringende (23) einen Ventilsitz (41) auf, der zusammen mit dem Ventilkopf (31) ein Aufnahmeteil-Ventil (4) bildet, wobei der Ventilkopf (31) in Ventil-Schließposition (401) dichtend in den Ventilsitz (41) einfasst und in Ventil-Öffnungsposition (402) an dem ersten Sitzringende (23) aus dem Führungs-Sitzring (2) hervortritt;
**(iv)** der Führungs-Sitzring (2) und der Ventilkörper (3) befinden sich in einem Lagersitz des Führungs-Radiallagers (25), der zwischen dem Führungs-Sitzring (2) und dem Ventilkörper (3) relative Drehung sperrt und relative axiale Gleitbewegbarkeit zulässt, wobei das Führungs-Radiallager (25) korrespondierende Lagerelemente (26, 34) aufweist, nämlich erste Lagerelemente (26), die an der Sitzring-Innenwand (21) hervorstehen, sowie zweite Lagerelemente (34), die an dem Ventilstegteil (33) ausgebildet sind, und wobei die korrespondierenden Lagerelemente (26, 34) im Lagersitz in wenigstens einer axialen Lagersitz-Lagerebene (LA) liegen,
**dadurch gekennzeichnet, dass** zur Montage und Demontage der Ventil-Baueinheit (1) zwischen den korrespondierenden Lagerelementen (26, 34) der wenigstens einen Lagersitz-Lagerebene (LA) eine Schlüsselverbindung derart eingerichtet und ausgebildet ist, dass der Lagersitz durch einen relativen Drehversatz und einen relativen Axialversatz zwischen dem Führungs-Sitzring (2) und dem Ventilkörper (3) herstellbar und umgekehrt lösbar ist, wobei die korrespondierenden Lagerelemente (26, 34) durch den relativen Drehversatz in freie Positionen außerhalb der Lagersitz-Lagerebene (LA) setzbar sind, in denen der ungeteilte Ventilkörper (3) in den Führungs-Sitzring (2) hineinführbar und auf umgekehrtem Weg aus ihm herausführbar ist, und wobei die korrespondierenden Lagerelemente (26, 34) durch den relativen Axialversatz in der Lagersitz-Lagerebene (LA) innerhalb des Führungs-Sitzrings (2) in und außer Eingriff bringbar sind.

2. Ventil-Baueinheit nach Anspruch 1, **dadurch gekennzeichnet, dass** das Führungs-Radiallager (25) durch zwei genannte Paare von korrespondierenden Lagerelementen (26, 34) gebildet ist, die im Umfangsabstand von 180° angeordnet sind.

3. Ventil-Baueinheit nach Anspruch 1 oder 2, **dadurch gekennzeichnet, dass** der Ventilfuß (32) durch wenigstens ein radiales Fußquerelement (320) gebildet ist, das in einer genannten Lagersitz-Lagerebene (LA) ausgerichtet ist und einen radialen Fuß-Querdurchmesser (DF) aufweist, der größer als ein Lagerinnendurchmesser (DL) ist, der durch diagonalen freien Abstand der ersten Lagerelemente (26) bestimmt ist.

4. Ventil-Baueinheit nach einem der Ansprüche 1 bis 3, **dadurch gekennzeichnet, dass** der Ventilkörper (3) ein außenumströmbarer Fluid-Strömungskörper ist.

5. Ventil-Baueinheit nach einem der Ansprüche 1 bis 4, **dadurch gekennzeichnet, dass** der Ventilstegteil (33) und der Ventilfuß (32) gleiche radiale Querdurchmesser (DS, DF) aufweisen.

6. Ventil-Baueinheit nach einem der Ansprüche 1 bis 5, **dadurch gekennzeichnet, dass** der Ventilkörper (3) mit dem Ventilkopf (31), dem Ventilfuß (32) und dem Ventil-Stegteil (33) einstückig ist.

7. Ventil-Baueinheit nach einem der Ansprüche 1 bis 6, **dadurch gekennzeichnet, dass** die korrespondierenden Lagerelemente (26, 34) durch Lagerelementpaare gebildet sind, die jeweils ein nasenförmiges Lagerelement (260) und ein schienenförmiges Lagerelement (340) aufweisen, die im Paar in der zugehörigen gemeinsamen Lagersitz-Lagerebene (LA) einander radial und axial überlappen und nur axial in die Überlappungsverbindung setzbar und umgekehrt aus dieser herausführbar sind.

8. Ventil-Baueinheit nach Anspruch 7, **dadurch gekennzeichnet, dass** die ersten Lagerelemente (26) die nasenförmigen Lagerelemente (260) in Form von Gleitaufnahmen (261) sind, und dass die zweiten Lagerelemente (34) die schienenförmigen Lagerränder (341) sind, die an dem Ventilstegteil (33) ausgebildet sind.

9. Ventil-Baueinheit nach Anspruch 8, **dadurch gekennzeichnet, dass** der Ventilstegteil (33) durch ein plattenförmiges Stegelement (330) mit die schienenförmigen Lagerelemente (34) bildenden Lagerrändern (341) gebildet ist.

10. Ventil-Baueinheit nach Anspruch 9, **dadurch gekennzeichnet, dass** ein radiales Fußquerelement (320) des Ventilfußes (32) eine Verdickung an dem plattenförmigen Stegelement (330) bildet.

11. Ventil-Baueinheit nach einem der Ansprüche 7 bis 10, **dadurch gekennzeichnet, dass** an den schienenförmigen Lagerelementen (340) Montageausnehmungen (35) ausgebildet sind, die zur Montage und Demontage der Ventil-Baueinheit (1) durch, in Bezug aufeinander, Drehverstellung und Axialverstellung zwischen dem Führungs-Sitzring (2) und dem Ventilkörper (3) in deckungsgleiche Positionen mit zugehörigen nasenförmigen Lagerelementen (260) setzbar sind.

12. Ventil-Baueinheit nach Anspruch 11, **dadurch gekennzeichnet, dass** die schienenförmigen Lagerelemente (340) an dem Ventilstegteil (33) ausgebildet sind und dass genannte Montageausnehmungen (35) im Bereich zwischen dem Ventilstegteil (33) und dem Ventilfuß (32) ausgebildet sind.

13. Montageverfahren zur Montage der Ventil-Baueinheit (1) nach Anspruch 11 oder 12, **dadurch gekennzeichnet, dass** die Ventil-Baueinheit (1) außerhalb eines Aufnahmeteilgehäuses (61) des Trockenkupplungs-Aufnahmeteils (6) mit folgenden Schritten in angegebener Reihenfolge montiert wird:
**(a)** der Führungs-Sitzring (2) und der Ventilkörper (3) werden in einer ersten Axialposition (A1) mit ihren zentralen Körperachsen (20, 30) fluchtend koaxial ausgerichtet, wobei der Ventilfuß (32) vor eines (23) der Sitzringenden gebracht wird;
**(b)** der Führungs-Sitzring (2) und der Ventilkörper (3) werden durch Relativdrehung zueinander um wenigstens eine ihrer zentralen Körperachsen (20, 30) in eine erste Umfangs-Winkelposition (W1) gebracht, wobei sich in dieser ersten Umfangs-Winkelposition (W1) axiale Lagerebenen (SA, VA), in denen einerseits die ersten Lagerelemente (26) und andererseits die zugehörigen zweiten Lagerelemente (34) des Führungs-Radiallagers (25) liegen, in unterschiedlichen Drehpositionen befinden und wobei die erste Umfangs-Winkelposition (W1) so gewählt wird, dass der Ventilkörper (3) mit dem Ventilfuß (32) voraus durch den Führungs-Sitzring (2) setzbar ist;
**(c)** in der ersten Umfangs-Winkelposition (W1) wird der Ventilkörper (3) soweit durch den Führungs-Sitzring (2) gesetzt, dass in einer zweiten Axialposition (A2) solche Radialebenen (SR, VR), in denen einerseits die ersten Lagerelemente (26) und andererseits die zugehörigen Montageausnehmungen (35) liegen, zusammenfallen;
**(d)** in der zweiten Axialposition (A2) werden der Führungs-Sitzring (2) und der Ventilkörper (3) durch Relativdrehung zueinander um wenigstens eine ihrer zentralen Körperachsen (20, 30) in eine zweite Umfangs-Winkelposition (W2) gebracht, in der die ersten Lagerelemente (26) in den Montageausnehmungen (35) deckungsgleich mit den zugehörigen zweiten Lagerelementen (34) zusammentreffen;
**(e)** zum Herstellen der den Lagersitz bildenden Überlappungsverbindung werden der Führungs-Sitzring (2) und der Ventilkörper (3) relativ zueinander axial versetzt.

14. Verfahren nach Anspruch 13, **dadurch gekennzeichnet, dass** in einem weiterem Schritt in der Überlappungsverbindung der Führungs-Sitzring (2) und der Ventilkörper (3) soweit axial versetzt werden, dass in einer dritten Axialposition (A3) der Ventilkopf (31) des Ventilkörpers (3) in den Ventilsitz (41) des Führungs-Sitzrings (2) einfasst.

15. Verfahren nach Anspruch 13 oder 14, **dadurch gekennzeichnet, dass** in einem weiteren Schritt die Steuerelemente (55) an den Ventilfuß (32) angesetzt werden.

16. Verfahren nach einem der Ansprüche 13 bis 15, **dadurch gekennzeichnet, dass** zur Montage der Ventil-Baueinheit (1) ein einstückiger Ventilkörper (3) verwendet wird.

17. Trockenkupplungs-Aufnahmeteil (6), eingerichtet für eine Fluid-Trockenkupplung (100), umfassend
- eine vorgefertigte Ventil-Baueinheit (1) nach einem der Ansprüche 1 bis 12,
- ein sich entlang einer Aufnahmeteilachse (60) axial erstreckendes rohrförmiges Aufnahmeteilgehäuse (61) mit einem ersten Gehäuseende (611) zum Kuppeln mit einem Trockenkupplungs-Steckteil (7) der Trockenkupplung (100) sowie mit einem zweiten Gehäuseende (612) zur Verbindung mit einem Leitungselement, wobei die Ventil-Baueinheit (1) in dem Aufnahmeteilgehäuse (61) angeordnet ist, sowie
- eine Aufnahmeteil-Steuereinrichtung (5) zum axialen Bewegen des Ventilkörpers (3) aus dem Führungs-Sitzring (2) an dem ersten Sitzringende (23) in die Ventil-Öffnungsposition (402) sowie umgekehrt in die Ventil-Schließposition (401), umfassend eine um die Aufnahmeteilachse (60) drehbare Steuerhülse (51) mit einer Führungskulisse (53) sowie Steuerelemente (55), die an dem Ventilfuß (32) angeordnet sind und die in die Führungskulisse (53) einfassen, wobei zentrale Körperachsen (30, 50, 20) des Ventilkörpers (3), der Steuerhülse (51) und des Führungs-Sitzrings (2) koaxial mit der Aufnahmeteilachse (60) sind, der Führungs-Sitzring (2) und die Steuerhülse (51) die Innenwandung eines Fluid-Durchgangsraums (62) bilden und der axial bewegbar gelagerte Ventilkörper (3) durch richtungsabhängige Drehung der Steuerhülse (51) und entsprechende Axialverlagerung in die Ventil-Schließposition (401) bzw. die Ventil-Öffnungsposition (402) setzbar ist.

18. Aufnahmeteil nach Anspruch 17, **dadurch gekennzeichnet, dass** eine Innenwand (510) der Steuerhülse (51) der Aufnahmeteil-Steuereinrichtung (5) und die Sitzring-Innenwand (21) des Führungs-Sitzrings (2) den Fluid-Durchgangsraum (62) mit gleichem Kreisquerschnitt bilden, der einen gemeinsamen Innendurchmesser (DI) bestimmt.

19. Aufnahmeteil nach Anspruch 17 oder 18, **dadurch gekennzeichnet, dass** der Ventilkörper (3) einen Axialteil aufweist, der durch den Ventilstegteil (33) und den Ventilfuß (32) gebildet ist, und dass zwischen dem Axialteil und der Innenwandung des Fluid-Durchgangsraums (62), der durch die Steuerhülse (51) und den Führungs-Sitzring (2) gebildet ist, eine Spielpassung ausgebildet ist.

20. Aufnahmeteil nach einem der Ansprüche 17 bis 19, **dadurch gekennzeichnet, dass** die Führungskulisse (53) der Steuerhülse (51) an ihrer dem ersten Gehäuseende (611) des Aufnahmeteilgehäuses (61) zugewandten Seite zum Einsetzen und Entnehmen der Steuerelemente (55) der Aufnahmeteil-Steuereinrichtung (5) axial offen ist, wobei die vorgefertigte Ventil-Baueinheit (1) genannte Steuerelemente (55) umfasst, die an den Ventilfuß (32) des Ventilkörpers (3) angesetzt sind.

21. Aufnahmeteil nach einem der Ansprüche 17 bis 20, **dadurch gekennzeichnet, dass** das Aufnahmeteilgehäuse (61) und die Steuerhülse (51) zwei separate Bauteile sind.

22. Aufnahmeteil nach Anspruch 21, **dadurch gekennzeichnet, dass** das Aufnahmeteilgehäuse (61) und die Steuerhülse (51) mittels einer lösbaren, Spiel belassenden Formschlussverbindung (8) aneinander gefügt sind.

23. Fluid-Trockenkupplung (100), gebildet durch ein Trockenkupplungs-Aufnahmeteil (6) nach einem der Ansprüche 17 bis 22 und ein an das Trockenkupplungs-Aufnahmeteil (6) angeschlossenes Trockenkupplungs-Steckteil (7) mit einem einen Steckteil-Ventilkörper (751) aufweisenden Steckteil-Ventil (75), wobei der Ventilkörper (3) des Trockenkupplungs-Aufnahmeteils (6) und der Steckteil-Ventilkörper (751) des Trockenkupplungs-Steckteils (7) in einem axial verlagerbaren Schiebeverbund aneinander sitzen, der gegen Rückstellkraft aus zugehörigen Ventil-Schließpositionen (401, 701) in Ventil-Öffnungspositionen (402, 702) setzbar ist.

## Claims

1. Prefabricated valve assembly (1) for installation in a dry-coupling receiving part (6), which is configured to couple with an associated dry-coupling plug-in part (7) of a fluid-carrying dry coupling (100);
**(i)** the valve assembly (1) comprises a guide seat ring (2) with a seat ring inner wall (21) and a valve body (3) radially mounted on the seat ring inner wall (21) by means of a guiding radial bearing (25) and slidingly movable axially along the central body axis (10) of the valve assembly (1), wherein the guide seat ring (2) has a first seat ring end (23) and for coupling can be placed in a locking position secured against rotation about its central body axis (20);
**(ii)** the valve body (3) comprises a valve head (31), a valve base (32) and a valve web part (33) mounted by means of the guiding radial bearing (25) on the seat ring inner wall (21), said valve web part joining the valve head (31) and the valve base (32) together and spacing them apart axially, wherein the valve base (32) situated outside the guide seat ring (2) can be joined to control elements (55) for the application of torque;
**(iii)** the guide seat ring (2) has a valve seat (41) on the first seat ring end (23), which together with the valve head (31) forms a receiving-part valve (4), wherein the valve head (31) engages sealingly in the valve seat (41) in the valve closing position (401) and protrudes from the guide seat ring (2) on the first seat ring end (23) in the valve opening position (402);
**(iv)** the guide seat ring (2) and the valve body (3) are located in a bearing seat of the guiding radial bearing (25) which blocks the relative rotation between the guide seat ring (2) and the valve body (3) and permits relative axial sliding mobility, wherein the guiding radial bearing (25) has corresponding bearing elements (26, 34), namely first bearing elements (26) which protrude on the seat ring inner wall (21), and second bearing elements (34) which are formed on the valve web part (33), and wherein the corresponding bearing elements (26, 34) lie in at least one axial bearing seat bearing plane (LA) in the bearing seat,
**characterised in that** for assembling and dismantling the valve assembly (1) a key connection is designed and configured between the corresponding bearing elements (26, 34) of the at least one bearing seat bearing plane (LA) in such a manner that the bearing seat can be established and conversely released by a relative rotatable displacement and a relative axial displacement between the guide seat ring (2) and the valve body (3), wherein the corresponding bearing elements (26, 34) can be placed by means of the relative rotatable displacement in free positions outside the bearing seat bearing plane (LA), in which positions the undivided valve body (3) can be guided into the guide seat ring (2) and conversely can be guided out of it, and wherein the corresponding bearing elements (26, 34) can be brought into and out of engagement inside the guide seat ring (2) by means of the relative axial displacement in the bearing seat bearing plane (LA).

2. Valve assembly according to claim 1, **characterised in that** the guiding radial bearing (25) is formed by two said pairs of corresponding bearing elements (26, 34) which are arranged at a peripheral spacing of 180°.

3. Valve assembly according to claim 1 or 2, **characterised in that** the valve base (32) is formed by at least one radial base transverse element (320) which is oriented in a said bearing seat bearing plane (LA) and has a base radial diagonal diameter (DF) which is greater than an inner diameter of the bearing (DL) that is determined by the diagonal clearance of the first bearing elements (26).

4. Valve assembly according to any one of claims 1 to 3, **characterised in that** the valve body (3) is a flow body around which fluid can flow externally.

5. Valve assembly according to any one of claims 1 to 4, **characterised in that** the valve web part (33) and the valve base (32) have identical radial diagonal diameters (DS, DF).

6. Valve assembly according to any one of claims 1 to 5, **characterised in that** the valve body (3) is formed integrally with the valve head (31), the valve base (32) and the valve web part (33).

7. Valve assembly according to any one of claims 1 to 6, **characterised in that** the corresponding bearing elements (26, 34) are formed by bearing element pairs that each have a tapered bearing element (260) and a rail-shaped bearing element (340) which in the pair overlap each other radially and axially in the associated common bearing seat bearing plane (LA) and can only be placed axially in the overlapping connection and conversely can be taken out thereof.

8. Valve assembly according to claim 7, **characterised in that** the first bearing elements (26) are the tapered bearing elements (260) in the form of sliding receptacles (261) and that the second bearing elements (34) are the rail-shaped bearing edges (341) which are formed on the valve web part (33).

9. Valve assembly according to claim 8, **characterised in that** the valve web part (33) is formed by a plate-shaped web element (330) with bearing edges (341) forming the rail-shaped bearing elements (34).

10. Valve assembly according to claim 9, **characterised in that** a radial base transverse element (320) of the valve base (32) forms a thickening on the plate-shaped web element (330).

11. Valve assembly according to any one of claims 7 to 10, **characterised in that** mounting recesses (35) are formed on the rail-shaped bearing elements (340) which for assembling and dismantling of the valve assembly (1) can be placed in congruent positions with associated tapered bearing elements (260) by means of rotational displacement and axial displacement, in relation to each other, between the guide seat ring (2) and the valve body (3).

12. Valve assembly according to claim 11, **characterised in that** the rail-shaped bearing elements (340) are formed on the valve web part (33) and that said mounting recesses (35) are formed in the region between the valve web part (33) and the valve base (32).

13. Assembly method for assembling the valve assembly (1) according to claim 11 or 12, **characterised in that** the valve assembly (1) is assembled outside a receiving-part housing (61) of the dry-coupling receiving part (6) with the following steps in the order indicated:
**(a)** the guide seat ring (2) and the valve body (3) are coaxially aligned in a first axial position (A1) with their central body axes (20, 30), wherein the valve base (32) is brought in front of one (23) of the seat ring ends;
**(b)** the guide seat ring (2) and the valve body (3) are brought by means of a rotation relative to each other about at least one of their central body axes (20, 30) into a first circumferential angular position (W1), wherein in this first circumferential angular position (W1) axial bearing planes (SA, VA) in which, on the one hand, the first bearing elements (26) and, on the other hand, the associated second bearing elements (34) of the guiding radial bearing (25) lie, are located in different rotational positions, and wherein the first circumferential angular position (W1) is chosen so that the valve body (3) can be placed through the guide seat ring (2) with the valve base (32) first;
**(c)** in the first circumferential angular position (W1), the valve body (3) is placed so far through the guide seat ring (2) that in a second axial position (A2) such radial planes (SR, VR), in which, on the one hand, the first bearing elements (26) and, on the other hand, the associated mounting recesses (35) lie, coincide;
**(d)** in the second axial position (A2), the guide seat ring (2) and the valve body (3) are brought by means of a rotation relative to each other about at least one of their central body axes (20, 30) into a second circumferential angular position (W2) in which the first bearing elements (26) coincide congruently in the mounting recesses (35) with the associated second bearing elements (34);
**(e)** to establish the overlapping connection forming the bearing seat, the guide seat ring (2) and the valve body (3) are displaced axially relative to each other.

14. Method according to claim 13, **characterised in that** in a further step the guide seat ring (2) and the valve body (3) are axially displaced in the overlapping connection so far that in a third axial position (A3) the valve head (31) of the valve body (3) engages in the valve seat (41) of the guide seat ring (2).

15. Method according to claim 13 or 14, **characterised in that** in a further step the control elements (55) are attached to the valve base (32).

16. Method according to any one of claims 13 to 15, **characterised in that** a one-piece valve body (3) is used for assembling the valve assembly (1).

17. Dry-coupling receiving part (6), configured for a dry-coupling for fluid (100), comprising
- a prefabricated valve assembly (1) according to one of claims 1 to 12,
- a tubular receiving-part housing (61) extending axially along a receiving-part axis (60) having a first housing end (611) for coupling with a dry-coupling plug-in part (7) of the dry coupling (100) and having a second housing end (612) for connecting to a pipe element, wherein the valve assembly (1) is arranged in the receiving-part housing (61), and
- a receiving-part control device (5) for axially moving the valve body (3) out of the guide seat ring (2) on the first seat ring end (23) into the valve opening position (402) and conversely into the valve closing position (401), comprising a control sleeve (51) rotatable about the receiving-part axis (60) with a guiding link (53) and control elements (55) which are arranged on the valve base (32) and which engage in the guiding link (53), wherein central body axes (30, 50, 20) of the valve body (3), the control sleeve (51) and the guide seat ring (2) are coaxial with the receiving-part axis (60), the guide seat ring (2) and the control sleeve (51) form the inner wall of a fluid passage space (62) and the valve body (3) mounted so as to be axially movable can be placed, due to directionally dependent rotation of the control sleeve (51) and corresponding axial displacement, into the valve closing position (401) or the valve opening position (402).

18. Receiving part according to claim 17, **characteri**s**ed in that** an inner wall (510) of the control sleeve (51) of the receiving-part control device (5) and the seat ring inner wall (21) of the guide seat ring (2) form the fluid passage space (62) with the same circular cross-section which determines a common inner diameter (DI).

19. Receiving part according to claim 17 or 18, **characterised in that** the valve body (3) has an axial part which is formed by the valve web part (33) and the valve base (32) and that a clearance fit is configured between the axial part and the inner wall of the fluid passage space (62) which is formed by the control sleeve (51) and the guide seat ring (2).

20. Receiving part according to any one of claims 17 to 19, **characterised in that** the guiding link (53) of the control sleeve (51) on its side directed towards the first housing end (611) of the receiving-part housing (61) is open axially for inserting and removing the control elements (55) of the receiving-part control device (5), wherein the prefabricated valve assembly (1) comprises the said control elements (55) which are attached to the valve base (32) of the valve body (3).

21. Receiving part according to any one of claims 17 to 20, **characterised in that** the receiving-part housing (61) and the control sleeve (51) are two separate components.

22. Receiving part according to claim 21, **characterised in that** the receiving-part housing (61) and the control sleeve (51) are joined to each other by means of a releasable form-fit connection (8) leaving play.

23. Dry coupling for fluid (100), formed by a dry-coupling receiving part (6) according to any one of claims 17 to 22 and a dry-coupling plug-in part (7) connected to the dry-coupling receiving part (6) with a plug-in-part valve (75) having a plug-in-part valve body (751), wherein the valve body (3) of the dry-coupling receiving part (6) and the plug-in-part valve body (751) of the dry-coupling plug-in part (7) sit against each other in an axially displaceable sliding combination, which can be placed out of associated valve closing positions (401, 701) into valve opening positions (402, 702) against the restoring force.

## Revendications

1. Module de soupape (1) préfabriqué destiné à être intégré dans un élément de logement d'un embrayage à sec (6) qui est conçu pour être couplé à une fiche d'embrayage à sec (7) correspondante d'un embrayage à sec pour fluides (100) ;
**(i)** le module de soupape (1) comprend une bague de siège de guidage (2) dotée d'une paroi intérieure de bague de siège (21), ainsi qu'un corps de soupape (3) disposé radialement sur la paroi intérieure de la bague de siège (21) au moyen d'un palier radial de guidage (25) et mobile de façon coulissante dans le sens axial le long de l'axe central (10) du module de soupape (1), la bague de siège de guidage (2) présentant une première extrémité de bague de siège (23) et étant susceptible d'être mise dans une position de blocage verrouillée contre la rotation autour de son axe central (20) pour le couplage ;
**(ii)** le corps de soupape (3) présente une tête de soupape (31), un pied de soupape (32) ainsi qu'une tige de soupape (33) disposée sur la paroi intérieure de la bague de siège (21) au moyen du palier radial de guidage (25), laquelle tige de soupape (33) relie entre eux la tête de soupape (31) et le pied de soupape (32) et les espace l'un de l'autre dans le sens axial, le pied de soupape (32) situé à l'extérieur de la bague de siège de guidage (2) étant susceptible d'être relié à des éléments de commande (55) pour l'application du couple de rotation ;
**(iii)** la bague de siège de guidage (2) présente à la première extrémité de bague de siège (23) un siège de soupape (41) qui forme avec la tête de soupape (31) une soupape d'élément de logement (4), la tête de soupape (31) pénétrant de manière hermétique dans le siège de soupape (41) en position de fermeture de soupape (401) et saillant au-dehors de la bague de siège de guidage (2) à la première extrémité de bague de siège (23) en position d'ouverture de soupape (402) ;
**(iv)** la bague de siège de guidage (2) et le corps de soupape (3) se trouvent dans un siège de palier du palier radial de guidage (25) qui empêche une rotation relative entre la bague de siège de guidage (2) et le corps de soupape (3) et autorise un mouvement coulissant relatif dans le sens axial, le palier radial de guidage (25) présentant des éléments de palier (26, 34) correspondants, à savoir des premiers éléments de palier (26) en saillie sur la paroi intérieure de la bague de siège (21), ainsi que des deuxièmes éléments de palier (34) constitués sur la tige de soupape (33), et les éléments de palier (26, 34) correspondants étant situés dans le siège de palier dans au moins un plan de palier de siège de palier (LA) axial,
**caractérisé en ce que** pour le montage et le démontage du module de soupape (1) entre les éléments de palier (26, 34) correspondants de l'au moins un plan de palier de siège de palier (LA), une liaison clé est conçue et formée de sorte que le siège de palier est susceptible d'être réalisé et, à l'inverse, annulé par un déport de rotation relatif et un déport axial relatif entre la bague de siège de guidage (2) et le corps de soupape (3), les éléments de palier (26, 34) correspondants étant susceptible d'être, par le déport de rotation relatif, mis en position libre en dehors du plan de palier de siège de palier (LA), positions dans lesquelles le corps de soupape (3) intégral est susceptible d'être introduit dans la bague de siège de guidage (2) et, par voie inverse, d'en être ressorti, et les éléments de palier (26, 34) correspondants étant susceptibles d'être, par le déport axial relatif, mis en prise et hors prise dans le plan de palier de siège de palier (LA) au sein de la bague de siège de guidage (2).

2. Module de soupape selon la revendication 1, **caractérisé en ce que** le palier radial de guidage (25) est formé par deux dites paires d'éléments de palier (26, 34) correspondants qui sont agencés espacés l'un de l'autre à distance périphérique de 180 °.

3. Module de soupape selon la revendication 1 ou 2, **caractérisé en ce que** le pied de soupape (32) est formé par au moins un élément transversal de pied radial (320) qui est orienté dans un dit plan de palier de siège de palier (LA) et qui présente un diamètre de section de pied radial (DF) supérieur à un diamètre interne de palier (DL), lequel est déterminé par espace libre diagonal des premiers éléments de palier (26).

4. Module de soupape selon l'une quelconque des revendications 1 à 3, **caractérisé en ce que** le corps de soupape (3) est un corps d'écoulement pour fluides susceptible d'être parcouru par le fluide à l'extérieur.

5. Module de soupape selon l'une quelconque des revendications 1 à 4, **caractérisé en ce que** la tige de soupape (33) et le pied de soupape (32) présentent des diamètres radiaux de section (DS, DF) identiques.

6. Module de soupape selon l'une quelconque des revendications 1 à 5, **caractérisé en ce que** le corps de soupape (3) est d'un seul tenant avec la tête de soupape (31), le pied de soupape (32) et la tige de soupape (33).

7. Module de soupape selon l'une quelconque des revendications 1 à 6, **caractérisé en ce que** les éléments de palier (26, 34) correspondants sont formés par des paires d'éléments de palier qui présentent chacune un élément de palier en forme de nez (260) et un élément de palier en forme de rail (340) qui se chevauchent, au sein de la paire, l'un l'autre dans le sens radial et dans le sens axial dans le plan de palier de siège de palier (LA) commun correspondant et qui ne sont susceptibles d'être mis en liaison de chevauchement et d'en être à l'inverse retirés que dans le sens axial.

8. Module de soupape selon la revendication 7, **caractérisé en ce que** les premiers éléments de palier (26) sont les éléments de palier en forme de nez (260) sous la forme de logements à coulissement (261), et que les deuxièmes éléments de palier (34) sont les bords de palier (341) en forme de rails qui sont constitués sur la tige de soupape (33).

9. Module de soupape selon la revendication 8, **caractérisé en ce que** la tige de soupape (33) est formée par un élément de tige en forme de plaque (330) doté de bords de palier (341) formant les éléments de palier en forme de rails (34).

10. Module de soupape selon la revendication 9, **caractérisé en ce qu'**un élément transversal de pied radial (320) du pied de soupape (32) forme un renflement sur l'élément de tige sous forme de plaque (330).

11. Module de soupape selon l'une quelconque des revendications 7 à 10, **caractérisé en ce que** sont constitués, sur les éléments de palier en forme de rails (340), des évidements de montage (35) qui sont susceptibles d'être mis, pour le montage et le démontage du module de soupape (1), en positions équivalentes avec des éléments de palier en forme de nez (260) correspondants, et ce par déplacement rotatif ou par déplacement axial entre la bague de siège de guidage (2) et le corps de soupape (3) l'un par rapport à l'autre.

12. Module de soupape selon la revendication 11, **caractérisé en ce que** les éléments de palier en forme de rails (340) sont constitués sur la tige de soupape (33) et que desdits évidements de montage (35) sont constitués dans la zone entre la tige de soupape (33) et le pied de soupape (32).

13. Procédé de montage pour le montage du module de soupape (1) selon la revendication 11 ou 12, **caractérisé en ce que** le module de soupape (1) est monté en dehors d'un boîtier d'élément de logement (61) de l'élément de logement de l'embrayage à sec (6), et ce par les étapes suivantes dans l'ordre indiqué :
**(a)** la bague de siège de guidage (2) et le corps de soupape (3) sont orientés de manière coaxiale dans l'alignement de leurs axes centraux (20, 30) dans une première position axiale (A1), le pied de soupape (32) étant amené avant l'une (23) des extrémités de la bague de siège ;
**(b)** la bague de siège (2) et le corps de soupape (3) sont, par rotation relative l'un par rapport à l'autre autour d'au moins l'un de leurs axes centraux (20, 30), amenés dans une première position d'angle périphérique (W1), des plans de palier axiaux (SA, VA), dans lesquels sont situés d'une part les premiers éléments de palier (26) et d'autre part les deuxièmes éléments de palier (34) correspondants du palier radial de guidage (25), se trouvant, dans cette première position d'angle périphérique (W1), dans des positions de rotation différentes et la première position d'angle périphérique (W1) étant choisie de sorte que le corps de soupape (3) est susceptible d'être passé au travers de la bague de siège de guidage (2) en commençant par le pied de soupape (32) ;
**(c)** dans la première position d'angle périphérique (W1), le corps de soupape (3) est passé au travers de la bague de siège de guidage (2) jusqu'à ce que coïncident, dans une deuxième position axiale (A2), des plans radiaux (SR, VR) tels qu'y sont situés d'une part les premiers éléments de palier (26) et d'autre part les évidements de montage (35) correspondants ;
**(d)** dans la deuxième position axiale (A2), la bague de siège de guidage (2) et le corps de soupape (3) sont amenés, par rotation relative l'un par rapport à l'autre autour d'au moins un de leurs axes centraux (20, 30), dans une deuxième position d'angle périphérique (W2) dans laquelle les premiers éléments de palier (26) dans les évidements de montage (35) coïncident de manière équivalente avec les deuxièmes éléments de palier (34) correspondants ;
**(e)** pour réaliser la liaison de chevauchement formant le siège de palier, la bague de siège de guidage (2) et le corps de soupape (3) sont déplacés dans le sens axial l'un par rapport à l'autre.

14. Procédé selon la revendication 13, **caractérisé en ce que**, au cours d'une autre étape, dans la liaison de chevauchement la bague de siège de guidage (2) et le corps de soupape (3) sont déplacés dans le sens axial jusqu'à ce que dans une troisième position axiale (A3), la tête de soupape (31) du corps de soupape (3) pénètre dans le siège de soupape (41) de la bague de siège de guidage (2).

15. Procédé selon la revendication 13 ou 14, **caractérisé en ce que**, au cours d'une autre étape, les éléments de commande (55) sont rapportés sur le pied de soupape (32).

16. Procédé selon l'une quelconque des revendications 13 à 15, **caractérisé en ce que** pour le montage du module de soupape (1), un corps de soupape (3) d'un seul tenant est utilisé.

17. Élément de logement d'un embrayage à sec (6) conçu pour un embrayage à sec pour fluides (100), comprenant
- un module de soupape (1) préfabriqué selon l'une quelconque des revendications 1 à 12,
- un boîtier d'élément de logement (61) tubulaire s'étendant axialement le long d'un axe d'élément de logement (60), doté d'une première extrémité de boîtier (611) destinée à être couplée avec une fiche d'embrayage à sec (7) de l'embrayage à sec (100) ainsi que d'une deuxième extrémité de boîtier (612) destinée à être reliée à une pièce de conduite, le module de soupape (1) étant agencé dans le boîtier d'élément de logement (61), ainsi qu'
- un dispositif de commande d'élément de logement (5), destiné à faire sortir dans le sens axial le corps de soupape (3) de la bague de siège de guidage (2) à la première extrémité de la bague de siège (23) pour le faire passer dans la position d'ouverture de soupape (402) ainsi que, à l'inverse, dans la position de fermeture de soupape (401), comprenant une douille de commande (51) rotative autour de l'axe de l'élément de logement (60) et dotée d'une coulisse de guidage (53), ainsi que des éléments de commande (55) qui sont agencés sur le pied de soupape (32) et qui pénètrent dans la coulisse de guidage (53), des axes centraux (30, 50, 20) du corps de soupape (3), de la douille de commande (51) et de la bague de siège de guidage (2) étant coaxiaux avec l'axe de l'élément de logement (60), la bague de siège de guidage (2) et la douille de commande (51) formant les parois intérieures d'un espace de passage de fluide (62), et le corps de soupape (3), disposé mobile dans le sens axial, étant susceptible d'être mis dans la position de fermeture de soupape (401) ou dans la position d'ouverture de soupape (402) en tournant la douille de commande (51) en fonction du sens et par déplacement axial correspondant.

18. Élément de logement selon la revendication 17, **caractérisé en ce qu'**une paroi intérieure (510) de la douille de commande (51) du dispositif de commande de l'élément de logement (5) et la paroi intérieure de la bague de siège (21) de la bague de siège de guidage (2) forment l'espace de passage de fluide (62) de même section circulaire qui détermine un diamètre intérieur commun (DI).

19. Élément de logement selon la revendication 17 ou 18, **caractérisé en ce que** le corps de soupape (3) présente une partie axiale qui est formée par la tige de soupape (33) et le pied de soupape (32), et qu'un ajustement avec jeu est constitué entre la partie axiale et les parois intérieures de l'espace de passage de fluide (62), lequel espace est constitué par la douille de commande (51) et la bague de siège de guidage (2).

20. Élément de logement selon l'une quelconque des revendications 17 à 19, **caractérisé en ce que** la coulisse de guidage (53) de la douille de commande (51) est ouverte dans le sens axial sur sa face tournée vers la première extrémité de boîtier (611) du boîtier d'élément de logement (61) pour placer et retirer les éléments de commande (55) du dispositif de commande de l'élément de logement (5), le module de soupape (1) préfabriqué comprenant desdits éléments de commande (55) qui sont rapportés sur le pied de soupape (32) du corps de soupape (3).

21. Élément de logement selon l'une quelconque des revendications 17 à 20, **caractérisé en ce que** le boîtier d'élément de logement (61) et la douille de commande (51) sont deux pièces distinctes.

22. Élément de logement selon la revendication 21, **caractérisé en ce que** le boîtier d'élément de logement (61) et la douille de commande (51) sont assemblés l'un à l'autre au moyen d'une liaison par complémentarité de forme (8) détachable et laissant du jeu.

23. Embrayage à sec pour fluides (100) formé par un élément de logement pour embrayage à sec (6) selon l'une quelconque des revendications 17 à 22 et une fiche d'embrayage à sec (7) raccordée à l'élément de logement pour embrayage à sec (6), dotée d'une soupape de fiche (75) présentant un corps de soupape de fiche (751), le corps de soupape (3) de l'élément de logement pour embrayage à sec (6) et le corps de soupape de fiche (751) de la fiche d'embrayage à sec (7) étant l'un à côté de l'autre dans un assemblage de glissement déplaçable dans le sens axial qui est susceptible d'être mis dans des positions d'ouverture de soupape (402, 702) contre toute force de rappel issue des positions de fermeture de soupape (401, 701) correspondantes.
